(19) Europäisches Patentamt
European Patent Office
Office européen des brevets

(11) Veröffentlichungsnummer: **0 065 278**
**B1**

(12) # EUROPÄISCHE PATENTSCHRIFT

(45) Veröffentlichungstag der Patentschrift: **07.01.87**

(51) Int. Cl.⁴: **C 08 J 5/18**, A 22 C 13/00

(21) Anmeldenummer: **82104161.3**

(22) Anmeldetag: **13.05.82**

(54) **Aus einer oder mehreren Schichten bestehende transparente, schrumpffähige Folie.**

(30) Priorität: **14.05.81 DE 3119217**
**14.05.81 DE 3119142**

(43) Veröffentlichungstag der Anmeldung:
**24.11.82 Patentblatt 82/47**

(45) Bekanntmachung des Hinweises auf die Patenterteilung:
**07.01.87 Patentblatt 87/2**

(84) Benannte Vertragsstaaten:
**AT BE CH DE FR GB IT LI NL SE**

(56) Entgegenhaltungen:
**EP - A - 0 034 757**
**DE - A - 2 309 420**
**DE - A - 2 538 892**

(73) Patentinhaber: **Feldmühle Aktiengesellschaft,**
**Fritz-Vomfelde-Platz 4, D-4000 Düsseldorf 11 (DE)**

(72) Erfinder: **Schumacher, Rudolf, Ing. (grad.),**
**Andreasstrasse 35, D-4060 Viersen 12 (DE)**

(74) Vertreter: **Uhlmann, Hans, Dr. rer.nat., Dipl.-Chem.,**
**Gladbacher Strasse 189, D-4060 Viersen 1 (DE)**

**EP 0 065 278 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine aus einer oder mehreren Schichten bestehende transparente schrumpffähige Folie, bei der die eine Schicht oder bei mehreren Schichten mindestens eine der Schichten unter Verwendung von teilaromatischem Polyamid hergestellt ist.

Polyamidfolien sind sowohl als Solo- als auch als Mehrschichtfolien bekannt und in weitem Umfang in der Verpackungsindustrie, insbesondere der Lebensmittelverpackung im Einsatz. Polyamidfolien werden insbesondere wegen ihrer hohen Festigkeit und geringen Sauerstoffdurchlässigkeit eingesetzt. In Verbindung mit Polyolefinfolien, also als Mehrschichtfolien, weisen sie neben der hohen Festigkeit eine gute Heisssiegelfähigkeit auf, die in Verbindung mit dem hohen Schmelzpunkt des Polyamids zu einer leichten Verarbeitbarkeit und sicheren Versiegelung führt. Die Polyolefinschicht wird dabei als Innenschicht der Verpackung genommen, d.h., dass die leichtversiegelbaren Schichten gegeneinander liegen, während die Polyamidschicht als Aussenschicht mit dem höheren Schmelzpunkt das Anhaften an die Heisssiegelbacken verhindert. Polyolefinschichten besitzen ausserdem eine wesentlich geringere Feuchtigkeitsdurchlässigkeit als Polyamid, so dass sich beide Kunststoffe hervorragend ergänzen und die Mehrschichtfolie aus Polyamid und Polyolefin die nahezu ideale Verpakkungsfolie ist.

Die Nachteile bisheriger Polyamidfolien als schrumpffähige Folien – gleichgültig ob sie als Mehrschicht- oder als Solofolie eingesetzt werden, liegen auf der einen Seite in ihrem unzulänglichen Schrumpfverhalten, bzw. in ihrer geringen Reckbarkeit bei vertretbaren Temperaturen und andererseits in ihrer häufig mangelhaften Transparenz.

Man hat deshalb bereits verschiedene Vorschläge gemacht, um Polyamidfolien für Schrumpfverpackungen einzusetzen, bzw. diesem Zweck anzupassen. So beschreibt die DE-B-1 769 510 eine nach dem Co-Extrusionsverfahren hergestellte Mehrschichtfolie aus Polyamid und Polyäthylen, wobei die Folie monoaxial oder biaxial gereckt sein kann. Die DE-B-2 352 553 setzt eine ähnlich aufgebaute Mehrschichtfolie aus linearem Polyamid oder linearen Co-Polyamiden und Polyäthylen als Wursthülle ein, wobei die Wursthülle in Längsrichtung gereckt wird, um den Schrumpf zu verbessern. Gemäss DE-A-2 850 181 wird für den gleichen Zweck eine Schlauchfolie aus einem Gemisch von aliphatischen, d.h. linearem Polyamid und einem Ionomerharz und/oder modifizierten Äthylen-Vinylacetat-Copolymeren vorgeschlagen. Bis auf Spezialzwecke haben sich alle diese Vorschläge am Markt nicht durchgesetzt, weil die Schrumpffähigkeit dieser Folien zu gering ist, der Aufwand für die Reckarbeit gross und sie ausserdem ungenügende Transparenz aufweisen.

Die in der DE-C-1 461 842 beschriebene Schrumpffolie ist aufgebaut aus aromatischen Polyamidbausteinen wie Terephthalsäure und verzweigten aliphatischen Diaminen, d.h. sie besteht aus einem teilaromatischen Polyamid, das bei Temperaturen von 150 bis 160 °C gereckt wird. Diese Folie weist ein besseres Schrumpfverhalten auf, hat aber den Nachteil, dass die aufzuwendenden Recktemperaturen sehr hoch sind und vor allem aber die anzuwendenden Schrumpftemperaturen mit 170 bis 190 °C für die meisten einzuschrumpfenden Güter zu hoch sind und das Verpackungsgut beeinträchtigen.

Die Literaturstelle: KUNSTSTOFF-HANDBUCH VI, Polyamide, Hanser (1966), gibt auf Seite 225 an, dass durch Verweilen von Polyamidmischungen während einer längeren Zeit von 0,5 bis 1 Tag im Schmelzzustand echte Mischpolyamide, mithin also Copolyamide durch Umamidierung entstehen können. Für die industrielle Praxis ist dieser Hinweis weitgehend ohne Bedeutung, da bei der Herstellung von Polyamidmischungen diese während der Extrusion nur für eine relativ kurze Zeit von wenigen Minuten im Schmelzzustand verbleiben und daher keine echten Mischpolyamide (Copolyamide) entstehen können. Weitere wesentliche Anforderungen, die ausser der Schrumpfbarkeit an solche Verpackungsfolien gestellt werden, sind eine gute Transparenz, ohne dabei spröde zu sein. Eine Verpackungsfolie soll möglichst glasklar und glänzend sein, um darin verpacktes Füllgut möglichst vorteilhaft zur Geltung zu bringen. Sie darf aber dabei keine Sprödigkeit aufweisen, wie das beispielsweise bei der Folie gemäss DE-C-1 461 842 der Fall ist, damit bei Einwirkung mechanischer Belastung beispielsweise durch Transport oder die Ware selbst keine Beschädigung auftritt.

Um die Transparenz zu verbessern, ist bereits vorgeschlagen worden, durch Polykondensation verschiedener Monomere eine amorphe Struktur aufzubauen. So wurde mit der DE-A-2 309 420 eine Verbundfolie aus Polyamid und Polyäthylen vorgeschlagen, wobei die Polyamidbasis aus Copolymerisaten aus ε-Caprolactam, 3-Aminomethyl-3,5,5-trimethylcyclohexylamin und Isophthalsäure besteht, wobei der Anteil an letzterem unterhalb 15 Gew.% liegt.

Die DE-A-2 538 892, die sich ebenfalls mit einer Mehrschichtfolie aus Polyäthylen und Polyamid befasst, sieht vor, dass als Polyamid ein Mischpolyamid aus ε-Caprolactam und AH-Salz – ein Polykondensat aus Hexamethylendiamin und Adipinsäure – zusammen mit Polyäthylen koextrudiert wird. Mit beiden Vorschlägen wird die Verbesserung der Transparenz angestrebt. Diese Mehrschichtfolien mit einer Polyamidschicht aus einem Copolymerisat der oben angegebenen monomeren Bestandteile zeigen aber ein unzureichendes Schrumpfvermögen.

Der Stand der Technik gibt damit zwar vereinzelt Hinweise, wie die eine oder andere Eigenschaft, beispielsweise die Schrumpffähigkeit oder die Transparenz verbessert werden kann. Keine der Schriften gibt aber einen Hinweis darauf, eine Folie zu schaffen, die unter vertretbaren und die Ware nicht schädigenden Temperaturen geschrumpft werden kann und trotzdem alle übrigen erwünschten Eigenschaften, wie Transparenz, Gasdichtigkeit u.ä. beibehält.

Der Erfindung liegt damit die Aufgabe zugrunde, nachfolgendes Eigenschaftsspektrum bei einer schrumpffähigen Folie mit Basis Polyamid zu schaffen:

1. Gute Schrumpffähigkeit bei verhältnismässig niedrigen Temperaturen
2. Reckbarkeit bei verhältnismässig niedrigen Temperaturen
3. Reckbarkeit mit nicht zu hohem Kraftaufwand
4. Beibehaltung der guten physikalischen Eigenschaften des Polyamids, wie Zähelastizität bzw. Flexibilität, Gasdichtigkeit, Vakuumverformbarkeit
5. Gute Transparenz und hoher Oberflächenglanz
6. Gute Verschweissbarkeit als Mehrschichtfolie, d.h. beispielsweise bei Kombination mit Polyolefinen, die üblicherweise die Schweissschicht bilden in Verbindung mit einem Polyamid, das einen solch hohen Erweichungspunkt hat, dass ein Ankleben an den Schweisswerkzeugen vermieden wird.
7. Hohe Schrumpfkraft, um eine stramme Umhüllung des Füllgutes zu gewährleisten.

Gelöst wird diese Aufgabe bei einer eingangs beschriebenen Folie durch die kennzeichnenden Merkmale von Patentanspruch 1.

Unter linearem Polyamid im Sinne der vorliegenden Erfindung werden ganz allgemein Polyamide, wie Polyamid 6, Polyamid 66, Polyamid 610, Polyamid 11, Polyamid 12 usw. verstanden, d.h. ein aus ausschliesslich aliphatischen Bestandteilen aufgebautes Polyamid.

Unter linearem Copolyamid werden beispielsweise solche Copolyamide verstanden wie Copolyamid 6/66, 6/12 und 69. Die linearen Copolyamide können als solche auch weichgemacht sein, z.B. durch Anteile an Monomeren wie beispielsweise ε-Caprolactam. Das hat den Vorteil, dass die Flexibilität der Folie weiter verbessert und die Reckfähigkeit erleichtert wird. Dem Begriff lineares Copolyamid werden auch solche Copolyamide zugerechnet, die Cycloaliphaten und Aromaten wie beispielsweise Isophthalsäure in untergeordneten Mengen, d.h. bis zu 15 Gew.% enthalten, wie sie in der bereits erwähnten DE-A-2 309 420 beschrieben sind. Diese geringen Anteile an Cycloaliphaten und Aromaten im Copolyamid bewirken lediglich eine amorphe Struktur des Polyamids in weiten Temperaturbereichen. Diese Copolyamide mit geringem Anteil an Cycloaliphaten und Aromaten dürfen keinesfalls verwechselt werden mit den nachfolgend näher definierten teilaromatischen Polyamiden, bei denen der lineare, d.h. aliphatische Bestandteil und aromatische Bestandteil definitionsgemäss in äquimolaren Anteilen vorliegt.

Unter teilaromatischen Polyamiden bzw. teilaromatischen Copolyamiden werden solche Polyamide verstanden, bei denen entweder die Diaminkomponente oder die Dicarbonsäurekomponente als Aromat vorliegen – und zwar entweder in äquimolaren Anteilen oder aber im Falle von Copolyamiden zumindest als überwiegender Mengenanteil in dem äquimolaren Anteil, der den Teilaromaten stellt. Bevorzugt geeignet sind die Polykondensationsprodukte aus aliphatischen Diaminen wie Hexamethylendiamin und aromatischen Dicarbonsäuren wie Terephthalsäure, insbesondere Isophthalsäure.

Im einzelnen kommen als teilaromatische Polyamide im Sinne der Erfindung in Betracht:

Polykondensate aus Diaminen, wie Äthylendiamin, Hexamethylendiamin, Dekamethylendiamin, Dodekamethylendiamin, 2,2,4- und/oder 2,4,4-Trimethylhexamethylendiamin, m- und/oder p-Xylylendiamin mit Dicarbonsäuren, wie Isophthalsäure und Terephthalsäure.

Wenn der aromatische Bestandteil in der Diaminkomponente liegt, kommen als Carbonsäurekomponenten aliphatische Dicarbonsäuren, wie Oxalsäure, Adipinsäure, Sebacinsäure u.ä. in Betracht.

Vollaromatische Polyamide, wie z.B. die Aramide sind für die erfindungsgemässe Verwendung ungeeignet.

Wie bereits ausgeführt, kann bei den teilaromatischen Polyamiden sowohl bei der Säure- als auch bei der Amin-Komponente ein Teil dieser äquimolaren aromatischen Anteile durch entsprechende Nichtaromaten ersetzt werden. In jedem Fall muss aber der überwiegende Teil der äquimolaren Menge, die den Teilaromaten stellt, teilaromatisch sein. An einem Beispiel erläutert bedeutet das:

Bei Isophthalsäure als teilaromatischen Bestandteil können bis zu 49 Mol% ersetzt sein durch beispielsweise aliphatische Dicarbonsäuren wie Adipinsäure. Dagegen darf keinesfalls der Gesamtanteil an Aromaten, sei es als Säure- oder als Aminkomponente, mehr als 100 Mol% sein, wobei Amin- und Säurekomponente nach dieser Definition insgesamt 200 Mol% ausmachen.

Die erfindungsgemässe Folie mit einer Polyamidschicht aus einem Gemisch von linearem Polyamid und/oder Copolyamid und/oder einer elastomeren Komponente einerseits mit teilaromatischem Polyamid und/oder teilaromatischem Copolyamid andererseits, die bei Temperaturen unterhalb 120 °C verstreckt ist, zeichnet sich durch eine hervorragende Schrumpffähigkeit und hohe Schrumpfkraft schon bei verhältnismässig niedrigen Temperaturen aus. Damit ist es möglich, temperaturempfindliche Güter schonend einzuschrumpfen, d.h. bei Temperaturen, bei denen das Füllgut noch nicht geschädigt wird. Infolge der hohen Schrumpfkraft werden die Füllgüter optimal umhüllt, auch bei unterschiedlichen Abmessungen bzw. unregelmässiger Gestalt, ohne dass unerwünschte Falten auftreten. Das hat den weiteren Vorteil, dass beim Verpacken von Fleisch und Fleischwaren das Austreten von Fleischsaft verhindert wird mit dem weiteren Vorteil, dass das Aussehen der Packung und die Haltbarkeit des Füllgutes verbessert wird. Sie haben ausserdem den Vorteil, dass das Verstrecken, d.h. die Reckbarkeit auch schon bei verhältnismässig niedrigen Temperaturen möglich und der Kraftaufwand verhältnismässig gering ist, was den Vorteil der Energieeinsparung und der geringen thermischen Belastung der Folie hat.

Trotzdem werden die guten physikalischen Eigenschaften, für die Polyamide und Co-Polyamide bekannt sind, weitgehend beibehalten, wie beispielsweise die für die Festigkeit der Packung so wichtige Eigenschaft der Zähelastizität bzw. Flexibilität und die für Lebensmittelverpackungen ebenfalls wichtige Eigenschaft der Gasdichtigkeit und Vakuumverformbarkeit auf den üblichen Verpackungsmaschinen. Ausserdem zeichnet sich die Folie durch eine verbesserte Transparenz und hohen Oberflächenglanz aus, was wiederum den optischen Gesamteindruck einer daraus hergestellten Verpackung erheblich fördert.

Die erreichte gute Schrumpffähigkeit und hohe Schrumpfkraft der erfindungsgemässen Folie sind umso überraschender, als Folien aus den Mischungsbestandteilen für sich allein bei den angestrebten Reck- und Schrumpftemperaturen ein ausgesprochen schlechtes Reck- und Schrumpfverhalten zeigen. So zeigt Diagramm 4 in den Kurvenzügen J und K den Reckgrad und das Schrumpfverhalten von zwei Polyamidfolien aus teilaromatischen Polyamiden bei einachsigen Reck- und Schrumpfversuchen, wobei sich zeigt, dass die Folie schon bei einem Reckgrad von 2,3 bzw. 2,7 ihre Streckgrenze erreicht und dann reisst. Ebenso ist die Schrumpffähigkeit ausserordentlich gering.

Der Kurvenzug B in Diagramm 1 und 4 zeigt das Reck- und Schrumpfverhalten von reinem Polyamid 6, der Kurvenzug C im Diagramm 1 das gleiche von reinem Co-Polyamid 69. Die Kurven zeigen, dass die Polyamide bzw. Co-Polyamide zwar ein etwas besseres Schrumpfverhalten als die teilaromatischen Polyamide haben, letztlich aber in ihrem Schrumpfverhalten nicht den Anforderungen der Verpackungsindustrie genügen.

Dagegen zeigen die Kurven G60, F und A60, dass bei Folien aus Abmischungen von linearem Polyamid 6 mit verschieden hohen Anteilen an teilaromatischem Polyamid, nämlich einem Polykondensat aus Hexamethylendiamin und Isophthalsäure in äquimolaren Mengen wesentlich bessere Schrumpfwerte erhalten werden, wobei die Schrumpfwerte umso besser sind, je höher der Anteil an teilaromatischem Polyamid ist. So zeigt der Kurvenzug A60 im Diagramm 4, bei dem der Anteil an teilaromatischem Polyamid 75% beträgt, das beste Schrumpfverhalten.

Bevorzugt sind Folien aus Abmischungen von 80 bis 40 Gew.% linearem Polyamid und/oder linearem Co-Polyamid und/oder elastomeren Komponenten mit 20 bis 60 Gew.% teilaromatischem Polyamid und/oder teilaromatischem Co-Polyamid. Dass man trotz des grössten Schrumpfvermögens bei hohen Anteilen von teilaromatischem Polyamid den Bereich von 20 bis 60 Gew.% teilaromatischem Polyamid bevorzugt, ist darin begründet, dass bei sehr hohen Anteilen an teilaromatischem Polyamid die Folien bereits verhältnismässig steif und spröde werden.

Dieses Maximum der Schrumpffähigkeit bei 75 Gew.% Anteil an teilaromatischem Polyamid zeigt auch das Diagramm 2, das Folien aus Abmischungen von teilaromatischem Polyamid, nämlich Hexamethylenisophthalamid und Polyamid 6 in verschiedenen prozentualen Zusammensetzungen und bei steigenden Reckgraden bei einachsiger Verstreckung zeigt. Die in Diagramm 3 dargestellten Reckkräfte derselben Folien, die bei dieser einachsigen Verstreckung aufzuwenden waren, weisen dagegen in dem bevorzugten Bereich ein Minimum auf, d.h. dass sich mit verhältnismässig geringem Kraftaufwand bei einer niedrigen Recktemperatur ein guter Schrumpf dieser Folie ergibt. Diagramm 5 zeigt in Übereinstimmung mit Diagramm 3, dass bei den reinen teilaromatischen Polyamiden bei einer Recktemperatur von 60 °C extrem hohe Reckkräfte aufgewendet werden müssen, während diese bei den erfindungsgemässen Abmischungen wesentlich niedriger liegen.

Kurve H in Diagramm 4 dagegen stellt unter Beweis, dass lediglich 10 Gew.% teilaromatisches Polyamid noch keinen nennenswerten Effekt auf das Schrumpfverhalten ausüben.

Als teilaromatisches Polyamid haben sich besonders bewährt Polyhexamethylenisophthalamid und Polytrimethylhexamethylenterephthalamid. Diese beiden Polyamide ergeben bereits bei Anteilen von 15 Gew.%, bevorzugt ab 20 Gew.% eine glasklare Folie und ausserdem wird die Blockneigung, d.h. das Aufeinanderkleben beim Abwickeln vermindert, insbesondere bei linearen Co-Polyamiden als anderem Mischungsbestandteil.

Von den linearen Polyamiden ist für die erfindungsgemässe Folie besonders bevorzugt Polyamid 66, weil die zugemischten teilaromatischen Polyamide den Erweichungsbereich stark herabsetzen, wodurch die Folie beim Versiegeln zum Ankleben an Siegelbacken neigt und damit zu Störungen des Abpackvorganges führen kann. Polyamid 66 dagegen verhindert durch seinen hohen Schmelzpunkt ein zu starkes Absinken des Erweichungspunktes des Gemisches im Sinne der Erfindung.

Ganz besonders gute Eigenschaften weisen solche Folien auf, die in der Abmischung der Polyamide ausser Polyamid 66 und teilaromatischen Polyamiden noch amorphe lineare Co-Polyamide, wie zweckmässig Co-Polyamid 6/66 enthalten, weil dadurch der Sprödigkeit, die durch die teilaromatischen Polyamide hervorgerufen wird, entgegengewirkt wird. Eine bevorzugte Zusammensetzung der Polyamidschicht besteht so aus:

40–60 Gew.% Polyamid 66
20–30 Gew.% teilaromatisches Polyamid
20–30 Gew.% amorphes, lineares Co-Polyamid.

Die teilaromatischen Polyamide können als weiteren Bestandteil elastomere Komponenten enthalten, wobei besonders bevorzugt auch hier wieder ein Dreikomponentengemisch ist, nämlich aus teilaromatischen Polyamiden, linearen Polyamiden und elastomerer Komponente. Dabei hält z.B. das bevorzugt verwendete Polyamid 66 wieder den Erweichungspunkt hoch, die elastomere Komponente verbessert die Flexibilität der Folie. Als elastomere Komponente haben sich dabei besonders bewährt: Elastomere wie Polybutadien und Gemische aus Polyamiden mit Elastomeren, Block-Copolymerisate aus Polyäthersegmenten und Polyamidsegmenten wie sie beispielsweise unter dem Handelsnamen ‹Pebax› am Markt sind und Block-Copolymerisate aus Segmenten von linearem Polyamid und Segmenten von Elastomeren. Feinteiliges Polybutadien wird dazu zweckmässig in einem der Polyamidbestandteile vorverteilt, bevorzugt in Polyhexamethylenisophthalamid zu 10 bis 30 Gew.%.

Die Verstreckung bzw. Reckung der Folie, die für die Erzeugung der Schrumpffähigkeit unabdingbare Voraussetzung ist, erfolgt bei Temperaturen unterhalb 120 °C, so dass die Folie in ihren physikalischen Eigenschaften noch nicht geschädigt wird. Zweckmässig erfolgt sie bei 60 bis 90 °C, wobei im allgemeinen niedrigere Recktemperaturen bevorzugt sind und zu höheren Schrumpfwerten führen. Grundsätzlich ist es ein Vorteil der Folie nach der Erfindung, dass sie sich bei so niedrigen und schonenden Temperaturen verstrecken lässt. Wenn auch eine einachsige Verstreckung schon zu einer schrumpffähigen Folie führt, so ist jedoch für die Verpackungspraxis die allseitige Einhüllung besser mit einer biaxial verstreckten Folie zu erzielen.

Unter Verstreckung wird verstanden bei einachsiger Verstreckung die Längung eines Folienstreifens unter Einfluss von Zugkräften, bei zweiachsiger Verstreckung, d. h. Verstreckung in Längs- und Querrichtung die Flächenvergrösserung.

Unter Reckgrad wird verstanden das Verhältnis der bleibenden Länge des Folienstreifens nach einachsigem Verstrecken zum Folienstreifen vor Verstreckung. Die Reckkraft ist die für das Erreichen eines bestimmten Reckgrades aufzuwendende Kraft.

Ein ganz besonderer Vorteil der erfindungsgemässen Folie liegt darin, dass zur erforderlichen Verstreckung des zu schrumpfenden Folienbereichs bereits ein Tiefziehvorgang ausreicht, d.h. eine Verformung unter Erwärmung auf den angegebenen Temperaturbereich und Anlegen von Vakuum oder gegebenenfalls Einwirkung von Druckluft. Der Vorteil dieser Ausgestaltung der Erfindung liegt darin, dass es nicht mehr erforderlich ist, die Folie einem gesonderten Reckvorgang zu unterwerfen, sondern dass die Kräfte des Tiefziehvorganges für die Verstreckung ausreichen, die erforderlich ist, um die Folie bzw. Verpackung daraus gut schrumpffähig zu machen.

Das bedeutet Einsparung des aufwendigen Arbeitsganges der biaxialen Reckung und die durch das Tiefziehen erzielte Schrumpffähigkeit führt nach Abfüllen des Füllgutes, Abschliessen mit einer Deckelfolie, Verschweissen der Ränder unter Evakuierung der Verpackung zu einer Verpackung, die nach Erwärmung hauteng auf das Füllgut aufschrumpft. Von besonderem Vorteil ist dabei, dass die erfindungsgemässe Folie gegenüber bekannten Polyamidfolien eine erhöhte Schrumpfkraft hat. Unter Schrumpfkraft versteht man die Kraft, die eine solche Folie von sich aus beim Schrumpfvorgang gegenüber einer gegen die Schrumpfrichtung wirkenden Zugkraft aufzubringen in der Lage ist. Eine hohe Schrumpfkraft ist wichtig, da bei der Verpackung relativ schwerer Füllgüter die Schwerkraft des Füllgutes überwunden werden muss. Um eine besonders hohe Schrumpfung zu erreichen, kann die durch Tiefziehen gereckte Folie als solche vor dem Tiefziehvorgang auch mono- oder biaxial vorgereckt werden. Ganz besondere Bedeutung kommt der Polyamidschicht nach der Erfindung in Kombination mit mindestens einer weiteren Schicht zu, weil sich damit in an sich bekannter Weise negative Eigenschaften der Solofolien eliminieren und positive Eigenschaften addieren lassen. So zeichnet sich Polyamid allgemein durch hohe Festigkeit, gute Tiefziehfähigkeit und relativ hohe Barrierewirkung gegenüber Luftsauerstoff aus. Nachteilig ist allerdings die hohe Wasserdampfdurchlässigkeit und das ungünstige Schweissverhalten. Das lässt sich in hervorragender Weise ausgleichen in Verbindung mit einer oder mehreren auf der Polyamidfolie haftenden Schichten aus Polyolefinen, insbesondere Polyäthylen und dessen Copolymeren. Polyolefine zeichnen sich aus durch hohe Wasserdampfbarriere und beim Polyäthylen durch gute Verschweissbarkeit. Nachteilig bei Polyolefinfolien sind zu geringe Barrierewirkung gegenüber Luftsauerstoff und die für viele Verwendungszwecke ungenügende Festigkeit. Beide Kunststoffe ergänzen sich deshalb vor allem als Verpackungsfolie für Lebensmittel in hervorragender Weise.

In einer ganz bevorzugten Ausgestaltung der Erfindung besteht die erfindungsgemässe Folie deshalb aus mindestens einer Polyamidschicht der vorstehend angegebenen Zusammensetzung und mindestens einer Polyolefinschicht. Dabei ist es von besonderem Vorteil, dass die oben aufgezeigten positiven Eigenschaften der erfindungsgemässen Polyamidschicht auch in der Kombination mit Polyolefinen voll erhalten bleiben. So zeigt der Kurvenzug V im Diagramm 11, dass eine Polyamid-Polyäthylenverbundfolie aus einer Schicht aus linearem Co-Polyamid mit über 90 Gew.% ε-Caprolactam gemäss Kurve D des Diagramms 1 und einem Homo-Polyäthylen niederer Dichte den für lineare Polyamide typischen Abfall der Schrumpffähigkeit bei höheren Reckgraden aufweist. Dagegen zeigen die Kurvenzüge Q, S und T bessere Schrumpfwerte und vor allem keine fallende Tendenz bei höherem Reckgrad. Dabei sind die Polyamidschichten der Folien der Kurven S und T wieder aus der besonders bevorzugten Dreierkombination aus linearem Polyamid, linearem Co-Polyamid und teilaromatischem Polyamid hergestellt.

Bevorzugt wird als Polyolefinschicht ein Polyolefin gewählt, das schon für sich allein eine hohe Schrumpfkraft besitzt und damit in Verbindung mit einer Polyamidschicht hoher Schrumpfkraft nach der Erfindung insgesamt eine ausgezeichnete Schrumpfkraft hat, wie sie beispielsweise und bevorzugt bei Tiefziehpackungen erforderlich sein kann.

Polyäthylen ist als zusätzliche Schicht zur erfindungsgemässen Polyamidschicht deshalb ein besonders geeigneter Partner, weil es gute Verschweissbarkeit und – abhängig vom Schmelzindex – gute Schrumpfkraft erbringt – neben allen anderen vorbekannten guten Eigenschaften des Polyäthylens. Zweckmässig werden, insbesondere um die Verschweissbarkeit zu verbessern und negative Auswirkungen auf die hervorragende Transparenz der Polyamidschicht zu vermeiden, für die Polyolefinschicht Äthylen-Copolymere oder deren Gemische eingesetzt. Hierzu gehören insbesondere auch solche Äthylen-Copolymere vom Typ der lonomer-Harze, weil diese eine grosse Variationsbreite in ihrem Eigenschaftsspektrum aufweisen. So gibt es dabei Typen, die hohe Schrumpfkraft haben und gewählt werden, wenn diese gefordert ist und andere, die nur geringe Schrumpfkraft haben, falls das Füllgut keine hohen Schrumpfkräfte verträgt.

Sehr gut geeignet sind auch Polyolefinschichten aus einem Polyäthylentyp niederer Dichte, bevorzugt einer Dichte von weniger als 0,935 g/cm$^3$ und linearer Molekülstruktur, sogenanntes linear low density polyethylene, weil sich Verbundfolien daraus durch gute Verschweissbarkeit, hohe mechanische Festigkeit und Schrumpfkraft auszeichnen.

Um die Verbundfolie dem jeweiligen Verwendungszweck optimal anpassen zu können, ist es vorteilhaft, die Polyolefinschicht aus Gemischen von Äthylen-Homo-Polymerisaten und Äthylen-Copolymerisaten herzustellen.

Die Schichten lassen sich in vorteilhafter Weise durch Koextrusion, und zwar sowohl nach dem Blas- als auch nach dem Flachfolie-Koextrusionsverfahren herstellen und zur Verbundfolie vereinigen, was den Vorteil eines einzigen Arbeitsschrittes hat. Ganz besonders vorteilhaft ist das Flachextrusionsverfahren, wenn Wert auf hohe Transparenz gelegt wird.

Man kann aber zweckmässig die Schichten auch miteinander verkleben, insbesondere dann, wenn eine der Schichten vom Kunststoff her für die Koextrusion weniger geeignet ist. Für das Verkleben kommen die üblichen Klebstoffe, bevorzugt aus der Gruppe der Polyurethane in Betracht.

Der für eine Schrumpffähigkeit erforderliche Reckvorgang erfolgt bei einer Mehrschichtfolie nach der Erfindung vorzugsweise so, dass die Verbundfolie als solche verstreckt wird. Eine Verstreckung der Einzelschichten ist zwar möglich, aber arbeitsaufwendig und kommt nur in Einzelfällen in Betracht, beispielsweise bei durch Verkleben hergestellten Verbundfolien.

Das bevorzugte gemeinsame Verstrecken erfolgt besonders auch dann, wenn die Verstrekkung als Tiefziehvorgang erfolgt, wobei bei der Herstellung eines Tiefziehbehälters die durch den Tiefziehvorgang bewirkte biaxiale Verstreckung nur in den ausgeformten Bereichen der Verbundfolie erfolgt ist.

Für eine so durch Tiefziehen hergestellte Tiefziehverpackung ist natürlich nach Befüllen mit dem zu verpackenden Füllgut noch eine Deckelfolie erforderlich, die den Behälter an seiner Oberseite dicht abschliesst. Diese Deckel- oder Verschlussfolien sind allgemein von geringerer Schichtdicke als die zum Tiefziehen mittels Vakuum benutzten Unterfolien, da keinerlei Verformung unter Schichtverdünnung stattfindet. Man nimmt hierzu vorzugsweise Verbundfolien aus mindestens zwei Schichten, wobei die dem vakuumgeformten Behälter zugewandte Seite aus einem Polyolefin besteht, das mit der Innenschicht des Behälters verschweisst werden kann. Die Aussenschicht besteht in der Regel aus hochfesten Folien, wie z. B. biaxial gereckten Polyester- oder Polypropylen-Folien, Cellulosehydratfolien bzw. licht- und gasdichte Folien, wie Aluminiumfolien usw. Die Gaspermeationseigenschaften der Deckelfolie sollten denen der verformten Unterfolie entsprechen, damit die Gesamtpackung dem Füllgut den nötigen Schutz vor Verderb bietet.

Nachfolgend werden zu den einzelnen Diagrammen die Legenden gegeben:

Diagramm 1: Abhängigkeit des Schrumpfverhaltens verschiedenartiger PA-Folien vom Reckgrad.

| Kurve: | Folie aus: |
|---|---|
| B | Polyamid 6, Viskosität 4 |
| C | Copolyamid 69 |
| D | Copolyamid aus mehr als 90 Gew.% ε-Caprolactam, 3-Aminomethyl-3,5,5-trimethylcyclohexylamin und Isophthalsäure, die beiden letzteren Monomeren zusammen weniger als 10 Gew.%. |

Reckung bei 60 °C.

Diagramm 2: Schrumpf in Abhängigkeit vom Reckgrad und von der Mischrezeptur.
Bei den Folien handelt es sich um solche aus einem Gemisch mit verschiedenen prozentualen Zusammensetzungen aus den Polyamiden PA 6 und Polyhexamethylenisophthalamid.

| Kurve: | |
|---|---|
| E1 | Reckgrad 1 : 1,5 |
| E2 | Reckgrad 1 : 2,0 |
| E3 | Reckgrad 1 : 2,5 |
| E4 | Reckgrad 1 : 2,75 |
| E5 | Reckgrad 1 : 3,0 |

Reckung bei 60 °C.

Diagramm 3: Reckkraft in Abhängigkeit vom Reckgrad und von der Mischrezeptur.
Die Folien haben die Zusammensetzung derjenigen von Diagramm 2.

Kurve:

| | |
|---|---|
| E6 | Reckgrad 1 : 1,5 |
| E7 | Reckgrad 1 : 2,0 |
| E8 | Reckgrad 1 : 2,5 |
| E9 | Reckgrad 1 : 2,75 |
| E10 | Reckgrad 1 : 3,0 |
| | Reckung bei 60 °C. |

Diagramm 4: Abhängigkeit des Schrumpfs verschiedener PA-Folien vom Reckgrad.

Kurve:

| | |
|---|---|
| A60 | 75% Polyhexamethylenisophthalamid<br>25% Polyamid 6, Viskosität 4 |
| B | Polyamid 6, Viskosität 4 |
| F | 50% PA 6, Visk. 4<br>50% PA aus Polyhexamethylenisophthalamid |
| G60 | 75% PA 6, Visk. 4<br>25% PA aus Polyhexamethylenisophthalamid |
| H | 90% PA 6, Visk. 3,5<br>10% PA aus Polyhexamethylenisophthalamid |
| J | Polyhexamethylenisophthalamid |
| K | Polytrimethylhexamethylenterephthalamid. |
| | Reckung bei 60 °C. |

Diagramm 5: Abhängigkeit der Reckkräfte verschiedenartiger PA-Folien vom Reckgrad.

Kurve:

| | |
|---|---|
| A1 | 75% Polyhexamethylenisophthalamid<br>25% Polyamid 6, Visk. 4 |
| B1 | Polyamid 6, Visk. 4 |
| F1 | 50% PA 6, Visk. 4<br>50% Polyhexamethylenisophthalamid |
| G1 | 75% PA 6, Visk. 4<br>25% Polyhexamethylenisophthalamid |
| H1 | 90% PA 6, Visk. 3,5<br>10% Polyhexamethylenisophthalamid |
| J1 | Polyhexamethylenisophthalamid |
| K1 | Polytrimethylhexamethylenterephthalamid. |
| | Reckung bei 60 °C. |

Diagramm 6: Abhängigkeit des Schrumpfverhaltens vom Reckgrad und von der Recktemperatur.
Bei der Folie handelt es sich um eine solche aus einem Gemisch von
75% Polyhexamethylenisophthalamid und 25% PA 6, Visk. 4.

Kurve:

| | |
|---|---|
| A60 | Reckung bei 60 °C |
| A90 | Reckung bei 90 °C |
| A120 | Reckung bei 120 °C |

Diagramm 7: Abhängigkeit der Reckkraft vom Reckgrad und von der Recktemperatur.
Die Folie entspricht der des Diagramms 6.

Kurve:

| | |
|---|---|
| A60-1 | Reckung bei 60 °C |
| A90-1 | Reckung bei 90 °C |
| A120-1 | Reckung bei 120 °C |

Diagramm 8: Abhängigkeit des Schrumpfverhaltens vom Reckgrad und von der Recktemperatur.
Bei der Folie handelt es sich um eine solche aus einem Gemisch von 50 Gew.% Polyhexamethylenisophthalamid und 50 Gew.% eines Copolyamids aus mehr als 90 Gew.% ε-Caprolactam, 3-Aminomethyl-3,5,5-trimethyl-Cyclohexylamin und Isophthalsäure.

Kurve:

| | |
|---|---|
| L60 | Reckung bei 60 °C |
| L90 | Reckung bei 90 °C |
| L120 | Reckung bei 120 °C |

Diagramm 9: Abhängigkeit der Reckkraft vom Reckgrad und von der Recktemperatur.
Die Folie entspricht der des Diagramms 8.

Kurve:

| | |
|---|---|
| L60-1 | Reckung bei 60 °C |
| L90-1 | Reckung bei 90 °C |
| L120-1 | Reckung bei 120 °C |

Diagramm 10: Abhängigkeit des Schrumpfverhaltens einer Polyamid/Äthylen-Vinylacetat-Copolymer-Folie vom Reckgrad.
Die Folie besteht aus einer Polyamidschicht hergestellt aus einem Gemisch von
75 Gew.% PA 6 und
25 Gew.% Polyhexamethylenisophthalamid
und einer Polyäthylenschicht eines Copolymerisats aus Äthylen und Vinylacetat (3 Gew.%)
Reckung bei 60 °C.

Diagramm 11: Abhängigkeit des Schrumpfverhaltens verschiedenartiger PA/PE-Folien mit einer Haftvermittler-Zwischenschicht aus Ionomerharz vom Reckgrad.
Reckung bei 60 °C.
Es handelt sich um koextrudierte PA/PE-Verbundfolien, wobei bei allen Folien die PE-Schicht aus einem Homo-Polyäthylen der Dichte 0,922 g/cm³ besteht und dem Schmelzindex von 0,85 g/10 Min.

Die einzelnen Schichten der Folien haben eine Dicke von
PA 45–55 µm
Haftvermittler 15 µm
PE 80–90 µm.
Die Polyamidschichten haben folgende Zusammensetzungen:

Kurve:

| | |
|---|---|
| Q | 80 Gew.% PA 66<br>20 Gew.% Polyhexamethylen-isophthalamid |
| S | 50 Gew.% PA 66<br>25 Gew.% Polyhexamethylen-isophthalamid<br>25 Gew.% Copolymer aus mehr als 90 Gew.% ε-Caprolactam, 3-Aminomethyl-3,5,5-Trimethylcyclohexylamin und Isophthalsäure |
| T | 50 Gew.% PA 66<br>25 Gew.% Copolyamid 6/66<br>25 Gew.% Polyhexamethylen-isophthalamid |
| V | Copolymer aus mehr als 90 Gew.% ε-Caprolactam 3-Aminomethyl-3,5,5-Trimethylcyclohexylamin und Isophthalsäure |

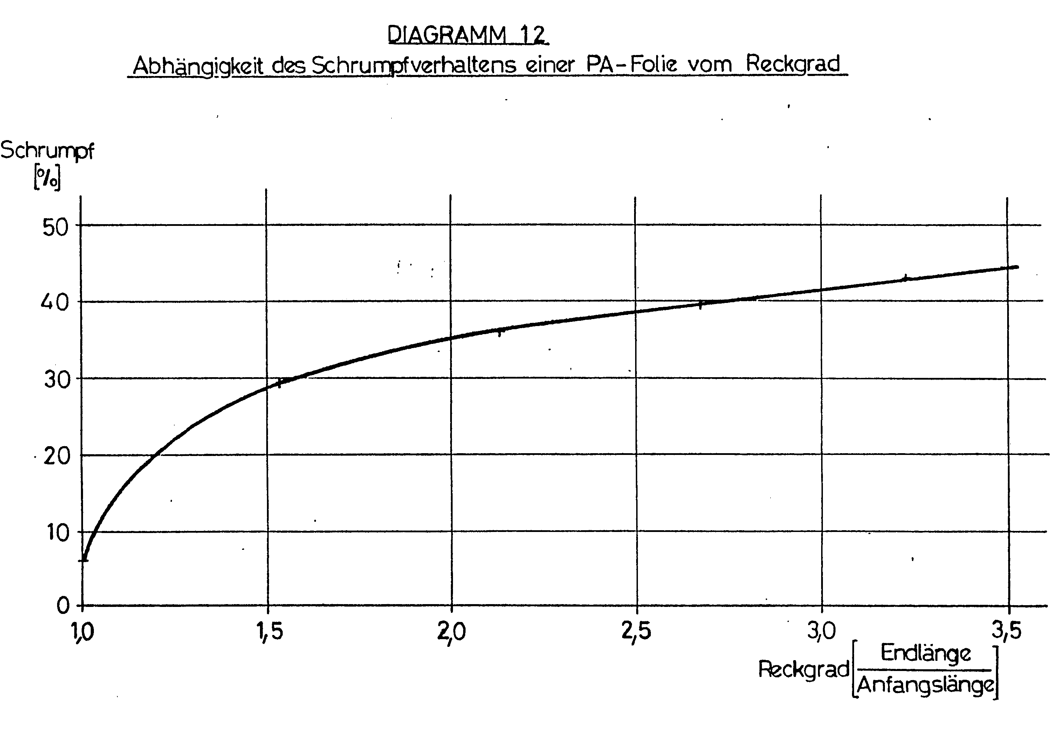

Diagramm 12: Abhängigkeit des Schrumpfverhaltens einer PA-Folie vom Reckgrad. Die Folie besteht aus einer Mischung von
60 Gew.% Polyhexamethylenadipamid (PA 66)
40 Gew.% einer Mischung aus überwiegend Polyhexamethylenisophthalamid und Anteilen kugelförmiger Teilchen von eingemischtem Polybutadien.
Reckung bei 60 °C.

Buchstabe R am Ende einiger Kurvenzüge bedeutet «Riss», d.h. bei der Reckung ist bei diesem Reckgrad die Folienprobe gerissen.

Nachfolgend wird die Erfindung an Hand von Beispielen, die vorteilhafte Ausgestaltungen der Erfindung betreffen, näher erläutert.

Beispiel 1
entspricht der Folie gemäss Diagramm 8 und 9. Die Folie wird hergestellt durch Vermischen von 50 Gew.% eines Copolyamids aus ε-Caprolactam, 3-Aminomethyl-3,5,5-Trimethylcyclohexylamin und Isophthalsäure, bei einem Gehalt an ε-Caprolactam von über 90%, einem Schmelzpunkt von 214 bis 217 °C und einer Rohdichte von 1,1 g/cm³ nach DIN 53479 und 50 Gew.% eines aus Hexamethylendiamin und Isophthalsäure (= Polyhexamethylenisophthalamid) hergestellten teilaromatischen Polyamids mit einer Schmelztemperatur von ca. 180 °C und einer Rohdichte von 1,19 g/cm³.

Die beiden Granulate werden auf einem handelsüblichen Taumel-Mischer miteinander vermischt und einem in der Praxis üblichen, für die Verarbeitung von Polyamidgranulaten geeigneten Extruder mit Breitschlitzdüse, Kühlwalzen und Wickler zu einer Flachfolie mit einer Dicke von 0,060 mm ± 10% verarbeitet. Die Folie ist relativ biegesteif und hat ein glasklares Aussehen und wird anschliessend verstreckt.

Zur Ermittlung der Reck- und Schrumpfbarkeit der Folie wird folgendermassen verfahren:

Ein Folienabschnitt wird im Normklima 23 °C/ 50% relative Feuchtigkeit während 48 Stunden frei gelagert, um einen Gleichgewichtszustand zwischen der Umgebungsfeuchtigkeit und der Feuchtigkeit der Folie herbeizuführen. Danach werden aus der Folie in Längsrichtung, d.h. in Extrusionsrichtung, Prüfstreifen von 15 mm Breite geschnitten. In einer Zugprüfmaschine nach DIN 51221 wird je ein Prüfstreifen mit einer Strichmarkierung entsprechend der Einspannlänge von 50,0 mm versehen in den Klemmen befestigt und für ca. 20 s mit einem Warmluftstrom von 60 °C, bzw. 90 °C, bzw. 120 °C erwärmt. Verwendet wurde ein Warmluftgebläse mit stufenlos einstellbarer Temperatur, wobei die jeweilige Behandlungstemperatur durch Messen des Warmluftstroms in 20 mm Abstand vom Düsenende bis zur Temperaturkonstanz eingeregelt wurde. Der gleiche Abstand wurde beim Erwärmungsvorgang des Prüfstreifens in der Zugprüfmaschine verwendet. Nach der Vorwärmzeit wird die Probe unter gleichmässigem Umfächeln mit Warmluft (Auf- und Abwärtsbewegung längs der Probe) von einer Seite weiter unter Wärmezufuhr gehalten, während die untere Klemme der Zugprüfmaschine mit einem Vorschub von 100 mm/min gleichmässig abwärts bewegt wird. Nach abgestuften Reckgraden (das ist das Verhältnis der bleibenden Endlänge zwischen den Markierungen zur Anfangslänge) wird jeweils ein Folienstreifen bis zu einer vorgegebenen Reckstrecke einachsig gereckt. Die max. Reckkraft zum Ende des Reckvorgangs wird an der Kraftmesseinrichtung der Zugprüfmaschine abgelesen.

Nach Ausgleich elastischer Dehnungen durch plane, freie Lagerung der Prüfstreifen während mindestens 15 min im Normklima, werden die neuen Abstände der Messmarken mit einem in 1 mm Einteilung unterteilten Massstab gemessen und als Endlängen bestimmt. Danach erhalten die Streifen je ein zusätzliches Gewicht von 0,2 g, befestigt am unteren Ende zur Ermöglichung eines einwandfreien Eintauchens in ein Flüssigkeitsbad. Während 5 s wird jeder Streifen durch rasches Eintauchen in ein Wasserbad von 95 ± 1 °C einer Wärmebehandlung ausgesetzt. Dabei tritt in Abhängigkeit von dem jeweiligen Reckgrad eine bestimmte Schrumpfung der Streifenlänge auf. Die neue, durch Schrumpf verkleinerte Länge wird gemessen. Die Längenänderung zwischen gereckter Länge und Restlänge nach dem Wärmeschrumpf-Vorgang wird als prozentualer Schrumpf berechnet.

Die Ergebnisse der Schrumpfwerte bei den jeweiligen Temperaturen sind dem Diagramm 8, die Werte der Reckkräfte sind dem Diagramm 9 zu entnehmen. Man erzielt ausserordentlich hohe Schrumpfwerte in dem Recktemperaturbereich von 60 bis 90 °C, während bei 120 °C schon ein deutlicher Abfall zu beobachten ist.

Vergleichsbeispiele:

Als Vergleichsbeispiele werden zwei handelsübliche PA-Folien aus

a) linearem Polyamid = Polyamid 6

b) linearem Copolyamid, bestehend aus ε-Caprolactam, 3-Aminomethyl-3,5,5-Trimethylcyclohexylamin und Isophthalsäure, wobei letzterer Anteil lediglich zu 2,6 Gew.% enthalten ist, nach gleichem Verfahren hergestellt und im einachsigen Reckversuch mit anschliessender Schrumpfprüfung untersucht, wie in Beispiel 1 beschrieben.

Das Reck- und Schrumpfverhalten von Folie gemäss a) mit einer Schichtdicke von im Mittel 68 µm zeigt Kurvenzug B von Diagramm 4.

Das Reck- und Schrumpfverhalten von Folie gemäss b) mit einer Schichtdicke von 82 µm im Mittel zeigt Kurvenzug D von Diagramm 1. Man erkennt in beiden Fällen eine fallende Tendenz der Kurven. Das bedeutet, dass mit zunehmender Verstreckung der Schrumpf wieder nachlässt. Zugleich liegen die Schrumpfwerte auf niedrigem Niveau. Der Wert von 30% wird nur von Folie gemäss b) kurzzeitig überschritten, während eine Folie gemäss Beispiel 1 schon bei einem Reckgrad von ca. 1,8 die Linie für 50% Schrumpf überschreitet (siehe Kurvenzüge L60 und L90 in Diagramm 8).

Zugleich ist der Kurvenzug D in Diagramm 1 ein Beweis für die Einordnung des Produktes Copolyamid aus ε-Caprolactam, 3-Aminomethyl-3,5,5-Trimethylcyclohexylamin und Isophthalsäure, wobei letzterer Anteil lediglich zu 2,6 Gew.% enthalten ist, als lineares Copolyamid, auch wenn ein geringfügiger Anteil an einem aromatischen Baustein enthalten ist (2,6 Gew.% Isophthalsäure). Selbst ein Anteil von 10 Gew.% teilaromatischem PA zu 90 Gew.% PA 6 verleiht der daraus hergestellten Folie noch nicht die gute Reck-/Schrumpf-Charakteristik mit ansteigender Kurve, wie der Kurvenzug H in Diagramm 4 zeigt.

Beispiel 2
entspricht der Folie der Kurve G1, bzw. G60 der Diagramme 4 und 5.

75% Polyamid 6-Granulat mit der relativen Lösungsviskosität 4,0 nach DIN 53724, einer Schmelztemperatur von 217 bis 221 °C und der Rohdichte von 1,12 bis 1,14 g/cm³ nach DIN 53479 wird in der unter Beispiel 1 beschriebenen Weise vermischt mit 25% Polyamid aus Hexamethylendiamin und Isophthalsäure mit den im Beispiel 1 näher angegebenen Daten. Diese Mischung wird zu einer Folie verarbeitet, wie in Beispiel 1 beschrieben. Auch hier beträgt die Foliendicke 0,060 mm ± 10%. Die Folie hat ein hochtransparentes, glasklares Aussehen. Die Biegesteifigkeit ist etwas höher als die der in Beispiel 1 beschriebenen Folie.

Die Folie wird weiter behandelt nach dem in Beispiel 1 beschriebenen Labor-, Reck- und Schrumpfverfahren. Die Schrumpfwerte in Abhängigkeit vom Reckgrad ergeben sich aus Kurve G60, bzw. G1 der Diagramme 4 und 5.

Beispiel 3
entspricht der Folie des Diagramms 6 und 7.

Zu 25 Gew.% Polyamid 6-Granulat, wie unter Beispiel 2 beschrieben, werden in der bereits angegebenen Weise

75 Gew.% Polyamid aus Hexamethylendiamin und Isophthalsäure, wie in den Beispielen 1 und 2 beschrieben, zugemischt.

Aus diesem Granulatgemisch wird nach dem bereits beschriebenen Verfahren eine Folie mit der Dicke von 0,060 mm ± 10% hergestellt, die ein hochtransparentes, glasklares Aussehen hat, während die Biegesteifigkeit höher ist als die der Folien gemäss der Beispiele 1 und 2.

Die messtechnische Auswertung dieser Folie gemäss obenstehender Beschreibung führt bezüglich der Schrumpfwerte zu den im Diagramm 6 beschriebenen Kurvenzügen, die zugehörigen Reckkräfte sind als Kurvenzüge in dem Diagramm 7 enthalten.

Beispiel 4
betrifft die Herstellung einer Verbundfolie, die durch Tiefziehen gereckt wird und die Herstellung einer Verpackung daraus.

Eine Polyamidfolie gemäss Beispiel 1 wird auf einer üblichen Folienkaschieranlage mit einem in Äthylacetat gelösten Polyurethanklebstoff (Polyester/Polyol + Hexamethylendiisocyanat) gleichmässig beschichtet, so dass eine Trockensubstanzmenge von 2,6 g/m² nach Abdunsten des Lösemittels erhalten wurde.

Gegen diese klebstoffbeschichtete Seite wurde eine Äthylen-Vinylacetat-Copolymerfolie – mit der Koronavorbehandelten Seite zur Klebstoffschicht gerichtet – kaschiert durch Anpressen im Kaschierwalzwerk mit einer Walzentemperatur von 75 °C und anschliessender Aushärtung während 10 Tagen bei Raumtemperatur. Dabei wurde eine feste Verbindung zwischen den Schichten hergestellt mit einer Schälfestigkeit im Abschälwinkel von 180 Grad von 220 cN/10 mm Folienbreite.

Die Äthylen-Vinylacetat-Copolymerfolie wurde hergestellt aus einem Granulat mit einem Schmelzindex von 0,8 g/10 min bei 190/2,16 gemäss DIN 53735, einer Rohdichte von 0,928 g/cm³ und einem Vinylacetat-Gehalt von 5% und in einer mittleren Dicke von 0,120 mm auf einer üblichen Blasfolienanlage.

Nach dem Blasvorgang, Abkühlen und Flachlegen des Schlauches wurde dieser einer Korona-Behandlung unterzogen, danach in zwei Einzelbahnen in üblicher Weise aufgeteilt und der Kaschieranlage zugeführt zwecks Verarbeitung in der beschriebenen Weise.

Die vorbeschriebene Polyamid/Äthylen-Vinylacetat-Copolymerverbundfolie wird auf eine Bahnbreite von 431 mm auf einer üblichen Rollenschneid-Maschine geschnitten und zu einer Folienrolle von 100 lfdm. aufgewickelt.

Herstellung der tiefgezogenen Verpackung.

Auf einer Vakuumtiefziehmaschine, die üblich zur Verpackung von Lebensmitteln, wie Stückwurst, Schinken usw. Verwendung findet, wurde die Folie mit einer Wärmeplatten-Temperatur von 90 °C erwärmt, unter Vakuumeinwirkung auf der Unterseite einer Vakuumform infolge des Differenzdrucks zum atmosphärischen Luftdruck verformt. Dabei lag die Polyamidseite nach unten. Das Werkzeug war als Doppelwerkzeug mit den Massen jeder Einzelform von 225 mm (Länge parallel zur Laufrichtung) × 180 mm (Breite) × 40 mm (Tiefe) ausgebildet. Die Taktzahl betrug 5 $min^{-1}$. Als Füllgut dienten Fleischwürste mit Darm in den Abmessungen Länge ca. 200 mm, Durchmesser ca. 30 mm, Anzahl: 5 Würste parallel nebeneinander in Längsrichtung.

Als Deckelfolie diente eine Verbundfolie aus 0,040 mm dicker Folie aus Polyamid 6 und einer 0,025 mm dicken Innenschicht aus einem speziell behandelten Polyäthylen, das ein leichtes Öffnen der Packung ermöglicht. Vor der Schweissstation wurde die Deckelfolie auf die ausgeformte und befüllte Unterfolie aufgebracht, wobei beide PE-Seiten der Verbundfolie in Kontakt miteinander gebracht wurden. Das gitterförmig gestaltete Schweisswerkzeug hatte eine Temperatur von 140 °C und wurde auf die Folie gepresst, die durch ein entsprechend geformtes Gegenwerkzeug abgestützt wurde. Das Verschweissen geschah unter gleichzeitigem Evakuieren des Packungsinnenraums. Hinter der Schweissstation war die Maschine zusätzlich mit einer Schrumpfeinrichtung ausgerüstet, bestehend aus einer mit Heissluft von ca. 140 °C gefüllten Hohlkammer, die um das ausgeformte Unterteil im Maschinentakt durch Anheben gegen eine Führungsplatte oberhalb der Deckelfolie gebracht wurde. Die Folie legte sich eng und faltenfrei um das Füllgut herum, das Austreten von Saft aus dem Füllgut wurde durch das stramme Umschliessen völlig verhindert. Die Schweissnaht blieb auch nach dem Schrumpfvorgang faltenfrei.

Beispiel 5

Eine Polyamidfolie gemäss Beispiel 2 wird kaschiert wie in Beispiel 4 beschrieben, mit einer Folie aus dem gleichen Äthylen-Vinylacetat-Copolymergranulat, wie unter Beispiel 4, hier jedoch in der Foliendicke von 0,060 mm.

Das Reck- und Schrumpf-Verhalten der so gewonnenen Polyamid-Äthylen-Vinylacetat-Copolymer-Verbundfolie wurde im Labor getestet unter Bedingungen wie die Folie im Beispiel 1.

Die Ergebnisse der Schrumpfwerte sind dem Kurvenzug in Diagramm 10 zu entnehmen.

Beispiel 6

beschreibt die Herstellung einer coextrudierten Verbundfolie. Eine Polyamid/Polyolefin-Verbundfolie wird hergestellt durch Co-Extrusion im Blasverfahren.

Die Co-Extrusions-Blasanlage besteht aus einem Extruder 1 für die Polyamid-Schicht, einem Ein-Schnecken-Extruder mit 60 mm Schneckendurchmesser, Schneckenlänge 27 D, 3-Zonen-Schnecke mit Mischteil in der Metering-Zone, einem Extruder 2 für die Haftvermittlerschicht, einem Ein-Schnecken-Extruder mit 30 mm Schneckendurchmesser vom Schnelläufer-Typ mit adiabatischer Fahrweise; einem Extruder 3 für die Polyolefinschicht, einem Ein-Schnecken-Extruder mit 60 mm Schneckendurchmesser, genuteter und gekühlter Einzugsbuchse und einer Schneckenlänge 27 D und einem Mischteil in der Meteringzone.

Zur Herstellung der nachfolgend beschriebenen Folie auf der oben beschriebenen 3-Schichten-Coextrusions-Folienanlage wird in folgender Weise verfahren:

Im Extruder 1 werden

60 Gew.-Teile lineares Copolyamid aus

85 Gew.% ε-Caprolactam

15 Gew.% Polyamid aus Hexamethylendiamin und Adipinsäure

40 Gew.-Teile teilaromatisches Polyamid aus Isophthalsäure und Hexamethylendiamin vom Schmelzpunkt ca. 180 °C (Kofler-Methode) und einer Dichte (DIN 53479) von 1,185 $g/cm^3$

intensiv als Granulate gemischt und bei einer Drehzahl von 52 $min^{-1}$ und Temperaturen von 240 °C im Schneckenzylinder und in den Flanschteilen als Schmelze dem 3-Schicht-Blaskopf zugeführt.

Im Extruder 2 wird der Haftvermittler aus Ionomerharz (Handelsname Surlyn® A 1705 von Du Pont mit Zink als Kation) mit einer Drehzahl 80 $min^{-1}$ und einer Zylinder- und Flanschtemperatur von 210 °C geschmolzen und als mittlere Schicht in den 3-Schicht-Blaskopf gepresst.

Im Extruder 3 wird nach dem Hochdruckverfahren hergestelltes LD-PE einer Dichte von 0,922 $g/cm^3$ und einem Schmelzindex 0,85 g/10 min (Handelsname Stamylan® 3720 X (DSM, NL-Zeist) bei einer Drehzahl 44 $min^{-1}$ und einer Zylinder- und Flanschtemperatur von 180 °C als Innenschicht extrudiert.

Der von allen 3 Produktschmelzen gespeiste 3-Schicht-Blaskopf mit 300 mm Ringspaltdurchmesser und Spaltweite 1,2 mm hatte eine Temperatur von 260 °C.

Die Gesamtdicke wurde zu 0,160 mm ermittelt. Davon entfielen auf die Polyamidschicht 0,055 mm, auf die Haftvermittler-Schicht 0,015 mm und auf die Polyäthylen-Schicht 0,090 mm.

Die in einem Aufblasverhältnis von B = 1,8 : 1 hergestellte Folie wurde in Einzelbahnen geschnitten und aufgewickelt. Die Folie hatte eine sehr gute Transparenz.

Die gemäss Beispiel 1 gereckten Teststreifen ergaben bei der in Beispiel 1 genannten Schrumpfprüfung bei

| einem Reckgrad von | einen Schrumpf von (in %) |
|---|---|
| 2,0 | 44 |
| 2,5 | 49,5 |
| 3,0 | 54. |

Damit ist diese Folie vorzüglich geeignet für eine Schrumpfverpackung.

Beispiel 7
beschreibt die Herstellung einer weiteren coextrudierten Verbundfolie, die durch Tiefziehen gereckt wird.

Über 3-schichtige-Blasfolien-Coextrusion, wie im Beispiel 6 beschrieben, wird eine Folie aus

I. Polyamid mit einer Schichtdicke von 35 µm

II. Ionomerharz wie im Beispiel 6 als Haftvermittler mit einer Schichtdicke von 15 µm und

III. Polyäthylen wie im Beispiel 6 mit einer Schichtdicke von 96 µm hergestellt.

Die Polyamidschicht I. besteht aus einer Mischung von

50 Gew.% Polyamid 66

25 Gew.% Co-Polyamid 6/66

25 Gew.% Polyhexamethylenisophthalamid

Diese Bestandteile werden durch intensive Vermischung der Granulate vor der Extrusion und Homogenisierung der Schmelze in einem Extruder mit Mischzonen-Schnecke zu einer homogenen Polyamidschicht extrudiert.

Bei dem Polyamid-Extruder wird die Zylindertemperatur auf 280 °C angehoben und die Blaskopftemperatur auf 270 °C eingestellt. Alle übrigen Parameter entsprechen den in Beispiel 6 angegebenen.

Die so hergestellte Folie wird als Einzelfolie in 431 mm Breite geschnitten und auf einer Vakuumformmaschine gemäss Beispiel 4 mit den gleichen Parametern bei einer Taktzahl von 4 und 8 pro min verarbeitet. Die erhaltene Verbesserung zeigt sich darin, dass auch bei der hohen Taktzahl unter Anhebung der Schweisstemperatur keinerlei Störungen des Tiefziehvorganges beobachtet werden.

Die koextrudierte Verbundfolie des Beispiels 7 entspricht dem Kurvenzug T aus Diagramm 11. Die dort dargestellte Streifen-Reckung steht damit in guter Übereinstimmung mit der beschriebenen Reckung durch Tiefziehen.

Es hat sich generell gezeigt, dass der einachsige Reckversuch im bevorzugten Temperaturbereich von 60–90 °C an Streifen, die sowohl in Längs- als auch in Querrichtung zur Folienlaufrichtung herausgeschnitten wurden, eine sichere Aussage auf das Schrumpfverhalten tiefgezogener Packungen erlaubt. Insbesondere bei Schrumpfmesswerten aus einachsigen Reckungen, die 35 bzw. 40% erreichen oder überschreiten, sind gute Ergebnisse bezügl. des Schrumpfverhaltens bei Tiefziehpackungen die Regel.

Bei einem weiteren Tiefziehversuch wurden aus der coextrudierten PA/PE-Verbundfolie gemäss diesem Beispiel auf einer Tiefziehmaschine – bekannt unter dem Handelsnamen «Multivac R 5000» – Folienmulden geformt. Es handelte sich bei den Tiefziehformen um ein sogenanntes Vierfach-Werkzeug, das aus 4 rechteckigen Formkammern gleicher Abmessungen besteht.

Die 4 Formkammern liegen auf einer Höhe nebeneinander, wobei die Längsseiten parallel zueinander und in Arbeitsrichtung der Maschine angeordnet sind. Die Abmessungen der einzelnen Formkammern betrugen: Länge 135 mm, Breite 85 mm, Tiefe 50 mm, wobei die Ecken und Kanten des Formbodens üblicherweise abgerundet ausgeführt waren.

Die Wärmeplatten-Temperatur für den Tiefziehvorgang betrug 92 °C, die Arbeitsgeschwindigkeit lag bei 7 Takten/min. Die Folienbreite betrug 420 mm.

Die unter Vakuumeinwirkung geformten Folienmulden wurden messtechnisch wie folgt untersucht:

Folienstreifen von 15 mm Breite wurden aus den Folienmulden herausgeschnitten in den Positionen L und Q. L bedeutet einen Verlauf des Streifens in Längsrichtung der Folienmulde, angefangen vom unverformten Randstück von ca. 10 mm Länge bis etwa in die Mitte des Muldenbodens, wobei die längslaufende Mittellinie der Mulde mit der Mittellinie der Längsrichtung des Streifens zusammenfällt. Die Gesamtlänge der Streifen betrug ca. 120 mm, wobei im Abstand von 25 mm, gemessen von der Grenzlinie zwischen verformtem und unverformtem Bereich eine 1. Messmarke und im Abstand von 70 mm von der 1. Messmarke eine 2. Messmarke angebracht wurde. Zwischen den beiden Messmarken war der Bereich der stärksten Verformung, und damit auch der stärksten Orientierung eingeschlossen.

Ferner wurde durch einen mechanischen Dikkenmess-Taster mit Skalenteilung von 1 µm als kleinster ablesbarer Dickeneinheit die geringste Foliendicke im Bereich der Verformung zwischen den beiden Messmarken bestimmt zu 30 µm. Die gemessenen Teilstücke des unverformten Randes hatten eine Dicke von 142 bis 145 µm. Zur Bestimmung des Schrumpfs dieser Streifen wurde ein aus 95 ± 1 °C eingestelltes Wasserbad verwendet.

Die Streifen wurden an einem Ende ausserhalb der Messmarken mit einem Gewicht von 0,2 g versehen, um das vertikale Eintauchen des Folienstreifens zu erleichtern. Das andere Ende wurde mit einer Pinzette erfasst, wobei der Folienstreifen, vertikal nach unten hängend durch rasches Eintauchen in das Bad und einer Verweilzeit von 5 s, sowie ebenso rascher Herausnahme einer Wärmeschrumpfung unterzogen wurde.

Der neue verkleinerte Abstand der Messmarken wurde nach Abkühlen und Abtrocknen des Streifens mit einem Massstab von 1 mm-Teilung bestimmt. Im Mittel ergab sich eine Schrumpfung von 21%, bezogen auf die Ausgangslänge von 70 mm.

In entsprechender Weise wurde bei der Position Q die Schrumpfung in Querrichtung bestimmt. Die Lage dieser Streifen fiel jeweils zusammen mit der quer zur Folienbahn verlaufenden Mittellinie, die die Breitseiten der Mulde miteinander verbindet. Die Gesamtlänge der Streifen betrug ca. 100 mm, davon entfielen auf das unverformte Randstück wieder 10 mm, die 1. Messmarke lag im Abstand von 20 mm von der Grenzlinie der Verformung, die 2. Messmarke wiederum im Abstand von 70 mm von der 1. Messmarke. Die dünnste Stelle wurde im Mittel zu 36 µm ermittelt. Die in der bereits angegebenen Weise durchgeführte Schrumpfmessung ergab 24%.

Im Vergleich dazu wurde eine ebenfalls über Co-Extrusion hergestellte Folie mit einer PA-Schicht nach dem Stand der Technik, die identisch ist mit der in Diagramm 11 Kurvenzug V beschriebenen Folie, in gleicher Weise tiefgezogen und geprüft.

Die dünnste Stelle in Position L betrug 16 µm bei 140–144 µm Dicke der unverformten Folie. Die Schrumpfung betrug 17%. In Position Q wurde die dünnste Stelle zu 29 µm bestimmt, die Schrumpfung betrug im Mittel 14%.

Es zeigt sich, dass eine dem Stand der Technik entsprechende PA-Schicht aus linearem Copolyamid sowohl dünnere Stellen in der Folienmulde ergibt als auch deutlich geringere Schrumpfwerte. Die dünneren Folienbereiche können infolge geringerer Sperrwirkung gegenüber eindiffundierendem Sauerstoff zum vorzeitigen Verderb von Lebensmitteln führen.

Die Schrumpfwerte aus diesen Messungen haben nur in ihrer Relation zueinander Bedeutung. Sie haben keine absolute Aussagekraft bezüglich der Messwerte im Vergleich zu den einachsigen Reck-/Schrumpfmessungen, da hier sowohl eine biaxiale Reckung vorliegt, als auch eine enge Staffelung differenter Reckgrade nebeneinander gegeben ist, bedingt durch den Tiefziehvorgang, die Formgeometrie usw.

Die Schrumpfmessung an Streifen aus Tiefziehpackungen zeigt aber sehr deutlich, dass die erfindungsgemässen Folien zu höheren Schrumpfwerten bei völlig gleichen Reck-Parametern führen als eine Folie, die dem Stand der Technik entspricht.

Beispiel 8

entspricht der Folie gemäss Diagramm 12. Die Folie wird hergestellt aus einem Gemisch von

60 Gew.% Polyhexamethylenadipamid und

40 Gew.% einer Mischung aus überwiegend Polyhexamethylenisophthalamid und Anteilen kugelförmiger Teilchen von einkompoundiertem Polybutadien unter dem Handelsnamen Durethan® VP KL 1-2311 der Firma Bayer AG

nach dem in Beispiel 1 beschriebenen Flachfolien-Extrusionsverfahren. Man erhält eine Folie mit einer leichten Trübung, die aber wegen der anderen vorzüglichen Eigenschaften, wie hohe Flexibilität, trockene Oberfläche, relativ niedrige Reckkräfte für bestimmte Anwendungsfälle in Kauf genommen werden kann.

Das Reck- und Schrumpfverhalten dieser Folie zeigt das Diagramm 12, in dem stetig steigende Schrumpf-Beträge in Prozent der Ausgangslänge mit steigendem Reckgrad erkennbar sind. Die Beurteilung der Reck- und Schrumpfbarkeit erfolgt durch einachsige Reckung bei 60 °C an Prüfstreifen gemäss Beispiel 1.

Zur Bestimmung der Schrumpfkraft an verschiedenen Polyamid/Äthylen-Vinylacetat-Copolymer-Verbundfolien wurden folgende Folien hergestellt:

Beispiel 9

Eine Flachfolie mit einer Schichtdicke von im Mittel 60 µm wurde hergestellt durch Vermischen von

75 Gew.% Polyamid 6

25 Gew.% Polyhexamethylenisophthalamid mit den in Beispiel 2 genannten Rohstoff-Daten.

Die Folie wird hergestellt auf der in Beispiel 1 beschriebenen Flachfolien-Extrusionsanlage. Gegen diese Polyamidfolie wird eine Folie aus Äthylen-Vinylacetat-Copolymer mit 3,5 Gew.% Vinylacetat von 120 µm Foliendicke mit Klebstoff kaschiert, wie in Beispiel 4 beschrieben. Die Äthylen-Vinylacetat-Copolymer-Folie hatte einen Schmelzindex von 0,8–1,0 g/10 min bei 190 °C/2,16 bar gemäss DIN 53735 und eine Rohdichte von 0,926 g/cm³.

Nach Aushärtung des Kaschierklebers werden aus der Folie Prüfstreifen von 15 mm Breite in Längsrichtung der Folie geschnitten. Diese Prüfstreifen werden nach Klimatisierung wie in Beispiel 1 auf einer Zugprüfmaschine bei 60 °C einachsig gereckt, und zwar mit einer Reckgeschwindigkeit von 250 mm/min. Alle anderen Bedingungen entsprechen denen des Beispiels 1. Die Streifen werden bei einem konstanten Reckgrad von 2,0 bis 2,1 verstreckt, um den Parameter «Schrumpfkraft» variieren zu können.

Nach mindestens 15 Minuten Lagerung der Proben nach der Reckung werden während des Schrumpfvorgangs im Wasserbad bei 95 ± 1 °C in einer genügend grossen Folienschlaufe der Prüfstreifen an das untere Ende der Streifen und ausserhalb des markierten gereckten Abschnitts Gewichte angehängt. Um zu den tatsächlichen Zugkräften zu gelangen, wird eine Auftriebskorrektur der Stahlgewichte in Wasser vorgenommen.

Die Streifen mit den angehängten Gewichten werden unter Vermeidung ruckartiger Beschleunigungen während des Eintauch- und Entnahmevorgangs in das Wasserbad bzw. aus dem Wasserbad während 5 sek. der Wärme ausgesetzt. Dabei wirkt die jeweilige Zugkraft der Kraft entgegen, die bei dem Schrumpfvorgang in dem Folienstreifen wirksam wird.

In der nachfolgenden Werttabelle sind die einwirkenden Zugkräfte als indirekte Beschreibung der mechanischen Schrumpfspannung als «Zugkraft während der Schrumpfung» bezeichnet, wobei die Dimension cN/10 mm Streifenbreite ist. Der dazu angegebene Schrumpfwert in Prozent zeigt an, welcher Schrumpfweg, bezogen auf die Anfangslänge gleich 100%, unter der einwirkenden Zugkraft noch zurückgelegt werden kann.

| Zugkraft während der Schrumpfung (cN/10 mm) | Schrumpf (%) |
|---|---|
| 100 | 30 |
| 200 | 23 |
| 300 | 16 |

Beispiel 10

Eine weitere erfindungsgemässe Folie wird hergestellt aus

80 Gew.% Polyamid 66 (Polyhexamethylenadipamid)

20 Gew.% Polytrimethylhexamethylenterephthalamid (Handelsname Trogamid® T) als Flachfolie mit einer Schichtdicke von im Mittel 60 µm. Verwendet wird die in Beispiel 1 beschriebene Flachfolienanlage. Die Folie wird Klebstoffkaschiert mit einer Äthylen-Vinylacetat-Copolymer-Folie, wie in Beispiel 9 beschrieben.

Die so hergestellte Verbundfolie wird in der gleichen Weise, wie in Beispiel 9 erläutert, bei einem konstanten Reckgrad von 2,2 gereckt und anschliessend unter verschiedenen Zugbelastungen wie in Beispiel 9 in der Wärme geschrumpft. Folgende Messwerte wurden erhalten:

| Zugkraft während der Schrumpfung (cN/10 mm) | Schrumpf (%) |
|---|---|
| 100 | 35 |
| 200 | 25 |
| 300 | 14 |

Vergleichsbeispiel zu den Beispielen 9 und 10: Eine dem Stand der Technik entsprechende Folie mit einer Schichtdicke von im Mittel 60 µm aus Polyamid 6, d.h. ein Polykondensat aus ε-Caprolactam, mit einer relativen Lösungsviskosität von 3,9 nach DIN 53724 wird wie in Beispiel 1 beschrieben zu einer Flachfolie extrudiert und durch Kaschieren mit einer in Beispiel 9 beschriebenen Äthylen-Vinylacetat-Copolymer-Folie von im Mittel 120 µm zu einer Verbundfolie verarbeitet.

Die Reck- und Schrumpfmessung wird in gleicher Weise, wie in Beispiel 9 beschrieben, vorgenommen, wobei folgende Werte gemessen werden:

| Zugkraft während der Schrumpfung (cN/10 mm) | Schrumpf (%) |
|---|---|
| 100 | 15 |
| 200 | 10 |
| 300 | 5,5 |

Das Vergleichsbeispiel zeigt, dass nicht annähernd die Schrumpfkräfte gegeben sind, wie bei den Folien gemäss der Erfindung. Anders ausgedrückt bedeuten die Messwerte, dass bei einem bestimmten Füllgewicht in einer tiefgezogenen Folienmulde bei den Folien gemäss der Erfindung noch genügend Schrumpfspannung bzw. Schrumpfkraft für eine enge Umhüllung des zu verpackenden Füllgutes zur Verfügung steht.

**Patentansprüche**

1. Aus einer oder mehreren Schichten bestehende transparente schrumpffähige Folie, bei der die eine Schicht oder bei mehreren Schichten mindestens eine der Schichten unter Verwendung von teilaromatischem Polyamid hergestellt ist, dadurch gekennzeichnet, dass die Polyamidschicht aus einer Mischung besteht von: 85 bis 10 Gew.% linearem Polyamid und/oder linearem Copolyamid und 15 bis 90 Gew.% teilaromatischem Polyamid und/oder teilaromatischem Copolyamid, wobei als Aromat entweder die Diaminkomponente oder die Dicarbonsäurekomponente vorliegt, und zwar in äquimolaren Anteilen oder im Fall von teilaromatischen Copolyamiden zumindest als überwiegender Mengenanteil in dem äquimolaren Anteil, der den Teilaromaten stellt und dass die Polyamidschicht bei Temperaturen unterhalb 120 °C verstreckt ist.

2. Folie nach Anspruch 1, dadurch gekennzeichnet, dass die Polyamidschicht aus einer Mischung von 80 bis 40 Gew.% linearem Polyamid und/oder linearem Copolyamid und 20 bis 60 Gew.% teilaromatischem Polyamid und/oder teilaromatischem Copolyamid besteht.

3. Folie nach einem der Ansprüche 1 und 2, dadurch gekennzeichnet, dass das teilaromatische Polyamid Polyhexamethylenisophthalamid ist.

4. Folie nach einem der Ansprüche 1 und 2, dadurch gekennzeichnet, dass das teilaromatische Polyamid Polytrimethylhexamethylenterephthalamid ist.

5. Folie nach einem der Ansprüche 1 und 2, dadurch gekennzeichnet, dass das lineare Polyamid Polyamid 6,6 ist.

6. Folie nach einem der Ansprüche 1 bis 5, dadurch gekennzeichnet, dass die Polyamidschicht aus einer Abmischung von 40–60 Gew.% Polyamid 66, 20–30 Gew.% teilaromatischem Polyamid und 20–30 Gew.% amorphem linearem Copolyamid besteht.

7. Folie nach einem der Ansprüche 1 bis 6, dadurch gekennzeichnet, dass das teilaromatische Polyamid oder Copolyamid 10 bis 30 Gew.% einer elastomeren Komponente enthält.

8. Folie nach einem der Ansprüche 1 bis 7, dadurch gekennzeichnet, dass die elastomere Komponente ein Block-Copolymerisat aus Segmenten von linearem Polyamid und Segmenten von Elastomeren ist.

9. Folie nach einem der Ansprüche 1 bis 8, dadurch gekennzeichnet, dass die Folie bei Temperaturen zwischen 60° und 90 °C verstreckt ist.

10. Folie nach einem der Ansprüche 1 bis 9, dadurch gekennzeichnet, dass die Verstreckung durch einen Tiefziehvorgang erfolgt ist.

11. Folie nach einem der Ansprüche 1 bis 10, dadurch gekennzeichnet, dass sie aus mindestens einer Polyamid- und mindestens einer Polyolefinschicht besteht.

12. Folie nach einem der Ansprüche 1 bis 10 und Anspruch 11, dadurch gekennzeichnet, dass die Polyolefinschicht aus einem Polyolefin mit hoher Schrumpfkraft besteht.

13. Folie nach einem der Ansprüche 1 bis 12, dadurch gekennzeichnet, dass die Polyolefinschicht aus einem Äthylen-Copolymer besteht.

14. Folie nach einem der Ansprüche 1 bis 12, dadurch gekennzeichnet, dass die Polyolefinschicht aus einem Ionomerharz besteht.

15. Folie nach einem der Ansprüche 1 bis 12, dadurch gekennzeichnet, dass die Polyolefinschicht aus Gemischen verschiedener Äthylen-Copolymere besteht.

16. Folie nach einem der Ansprüche 1 bis 12, dadurch gekennzeichnet, dass die Polyolefinschicht Polyäthylentypen niederer Dichte mit linearer Molekülstruktur enthält.

17. Folie nach einem der Ansprüche 1 bis 12, dadurch gekennzeichnet, dass die Polyolefinschicht aus Gemischen von Äthylen-Homo-Polymerisaten und Äthylen-Copolymerisaten besteht.

18. Folie nach einem der Ansprüche 1 bis 17, dadurch gekennzeichnet, dass die Schichten koextrudiert sind.

19. Folie nach einem der Ansprüche 1 bis 17, dadurch gekennzeichnet, dass die Schichten miteinander verklebt sind.

20. Folie nach einem der Ansprüche 1 bis 19, dadurch gekennzeichnet, dass die Polyamid-Polyolefin-Verbundfolie als solche verstreckt und/oder tiefgezogen ist.

## Claims

1. Transparent shrinkable film consisting of one or more layers, in which the one layer or, in the case of a plurality of layers, at least one of the layers has been manufactured using partially aromatic polyamide, characterised in that the polyamide layer comprises a mixture of: from 85 to 10% by weight of linear polyamide and/or linear copolyamide and from 15 to 90% by weight of partially aromatic polyamide and/or partially aromatic copolyamide, either the diamine constituent or the dicarboxylic acid constituent being present as the aromatic component and being present in equimolar amounts or, in the case of partially aromatic copolyamides, at least as the predominant proportion in the equimolar amount that provides the partially aromatic component, and that the polyamide layer is drawn at temperatures of less than 120 °C.

2. Film according to claim 1, characterised in that the polyamide layer comprises a mixture of from 80 to 40% by weight of linear polyamide and/or linear copolyamide and from 20 to 60% by weight of partially aromatic polyamide and/or partially aromatic copolyamide.

3. Film according to claim 1 or 2, characterised in that the partially aromatic polyamide is polyhexamethylene isophthalamide.

4. Film according to claim 1 or 2, characterised in that the partially aromatic polyamide is polytrimethylhexamethylene terephthalamide.

5. Film according to claim 1 or 2, characterised in that the linear polyamide is polyamide 6.6.

6. Film according to any one of claims 1 to 5, characterised in that the polyamide layer comprises a mixture of 40 to 60% by weight of polyamide 6.6, 20 to 30% by weight of partially aromatic polyamide and 20 to 30% by weight of amorphous linear copolyamide.

7. Film according to any one of claims 1 to 6, characterised in that the partially aromatic polyamide or copolyamide contains from 10 to 30% by weight of an elastomeric constituent.

8. Film according to any one of claims 1 to 7, characterised in that the elastomeric constituent is a block copolymer comprising segments of linear polyamide and segments of elastomer.

9. Film according to any one of claims 1 to 8, characterised in that the film is drawn at temperatures of between 60 and 90 °C.

10. Film according to any one of claims 1 to 9, characterised in that the drawing is effected by means of a deep drawing process.

11. Film according to any one of claims 1 to 10, characterised in that it comprises at least one polyamide layer and at least one polyolefin layer.

12. Film according to any one of claims 1 to 10 and 11, characterised in that the polyolefin layer comprises a polyolefin having a high shrinking force.

13. Film according to any one of claims 1 to 12, characterised in that the polyolefin layer comprises an ethylene copolymer.

14. Film according to any one of claims 1 to 12, characterised in that the polyolefin layer comprises an ionomeric resin.

15. Film according to any one of claims 1 to 12, characterised in that the polyolefin layer comprises mixtures of different ethylene copolymers.

16. Film according to any one of claims 1 to 12, characterised in that the polyolefin layer contains low density polyethylene types having a linear molecular structure.

17. Film according to any one of claims 1 to 12, characterised in that the polyolefin layer comprises mixtures of ethylene homopolymers and ethylene copolymers.

18. Film according to any one of claims 1 to 17, characterised in that the layers are co-extruded.

19. Film according to any one of claims 1 to 17, characterised in that the layers are bonded to one another.

20. Film according to any one of claims 1 to 19, characterised in that the polyamide/polyolefin composite film is drawn and/or deep drawn as such.

## Revendications

1. Feuille transparente, rétractable, constituée d'une ou de plusieurs couches, dans laquelle la couche unique ou, dans le cas de plusieurs couches, au moins une des couches est préparée par utilisation de polyamide partiellement aromatique, caractérisée par le fait que la couche de polyamide est constituée d'un mélange de: 85 à 10% en poids de polyamide linéaire et/ou de copolyamide linéaire, et 15 à 90% en poids de polyamide partiellement aromatique et/ou de copolyamide partiellement aromatique, soit le composant diamine soit le composant acide dicarboxylique étant présent en tant que composant aromatique, et certes en parties équimolaires ou, dans le cas de copolyamides partiellement aromatiques, au moins en tant que fraction prédominante dans la partie équimolaire qui constitue le composant partiellement aromatique, et que la couche de polyamide est étirée à des températures inférieures à 120 °C.

2. Feuille selon la revendication 1, caractérisée par le fait que la couche de polyamide est constituée d'un mélange de 80 à 40% en poids de polyamide linéaire et/ou de copolyamide linéaire et 20 à 60% en poids de polyamide partiellement aromatique et/ou de copolyamide partiellement aromatique.

3. Feuille selon l'une des revendications 1 et 2, caractérisée par le fait que le polyamide partiellement aromatique est le polyhexaméthylène-isophtalamide.

4. Feuille selon l'une des revendications 1 et 2, caractérisée que le fait que le polyamide partiellement aromatique est le polytriméthylhexaméthylène-téréphtalamide.

5. Feuille selon l'une des revendications 1 et 2, caractérisée par le fait que le polyamide linéaire est le polyamide 6,6.

6. Feuille selon l'une des revendications 1 à 5, caractérisée par le fait que la couche de polyamide est constituée d'un mélange de 40–60% en poids de polyamide 66, 20–30% en poids de polyamide partiellement aromatique et 20–30% en poids de copolyamide linéaire amorphe.

7. Feuille selon l'une des revendications 1 à 6, caractérisée par le fait que le polyamide ou le copolyamide partiellement aromatique contient de 10 à 30% en poids d'un composant élastomère.

8. Feuille selon l'une des revendications 1 à 7, caractérisée par le fait que le composant élastomère est un copolymère séquencé constitué de segments de polyamide linéaire et de segments d'élastomère.

9. Feuille selon l'une des revendications 1 à 8, caractérisée par le fait que la feuille est étirée à des températures comprises entre 60 et 90 °C.

10. Feuille selon l'une des revendications 1 à 9, caractérisée par le fait que l'étirage est effectué par un processus d'emboutissage.

11. Feuille selon l'une des revendications 1 à 10, caractérisée par le fait qu'elle est constituée d'au moins une couche de polyamide et d'au moins une couche de polyoléfine.

12. Feuille selon l'une des revendications 1 à 10 et la revendication 11, caractérisée par le fait que la couche de polyoléfine est constituée d'une polyoléfine à pouvoir de retrait élevé.

13. Feuille selon l'une des revendications 1 à 12, caractérisée par le fait que la couche de polyoléfine est constituée d'un copolymère d'éthylène.

14. Feuille selon l'une des revendications 1 à 12, caractérisée par le fait que la couche de polyoléfine est constituée d'une résine ionomère.

15. Feuille selon l'une des revendications 1 à 12, caractérisée par le fait que la couche de polyoléfine est constituée de mélanges de divers copolymères d'éthylène.

16. Feuille selon l'une des revendications 1 à 12, caractérisée par le fait que la couche de polyoléfine contient des types de polyéthylène de faible densité, à structure moléculaire linéaire.

17. Feuille selon l'une des revendications 1 à 12, caractérisée par le fait que la couche de polyoléfine est constituée de mélanges d'homopolymères d'éthylène et de copolymères d'éthylène.

18. Feuille selon l'une des revendications 1 à 17, caractérisée par le fait que les couches sont coextrudées.

19. Feuille selon l'une des revendications 1 à 17, caractérisée par le fait que les couches sont collées les unes aux autres.

20. Feuille selon l'une des revendications 1 à 19, caractérisée par le fait que la feuille composite de polyamide-polyoléfine est étirée et/ou emboutie telle quelle.

## DIAGRAMM 1

Abhängigkeit des Schrumpfverhaltens verschiedenartiger PA-Folien vom Reckgrad

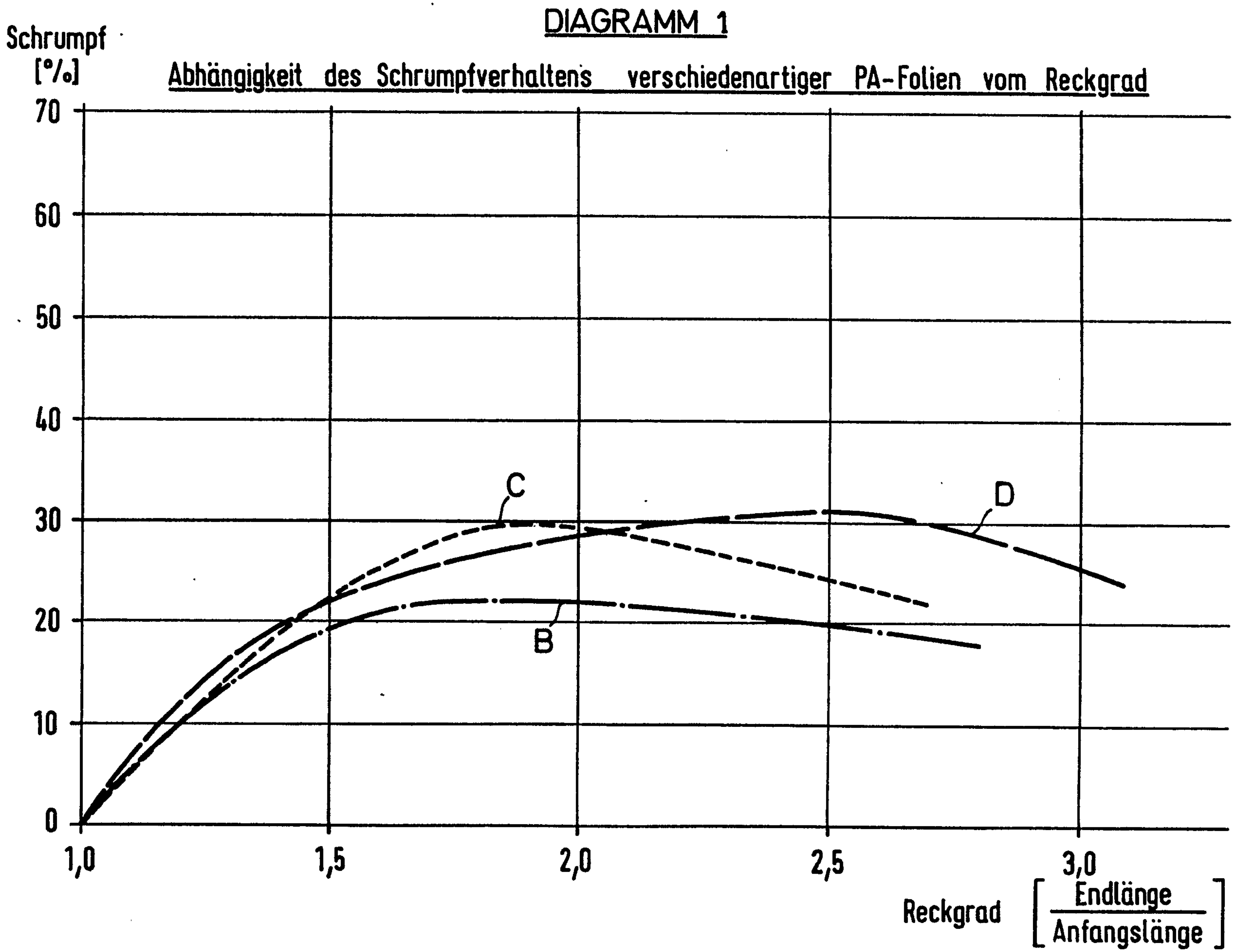

# DIAGRAMM 2

Schrumpf in Abhängigkeit vom Reckgrad und von der Mischrezeptur

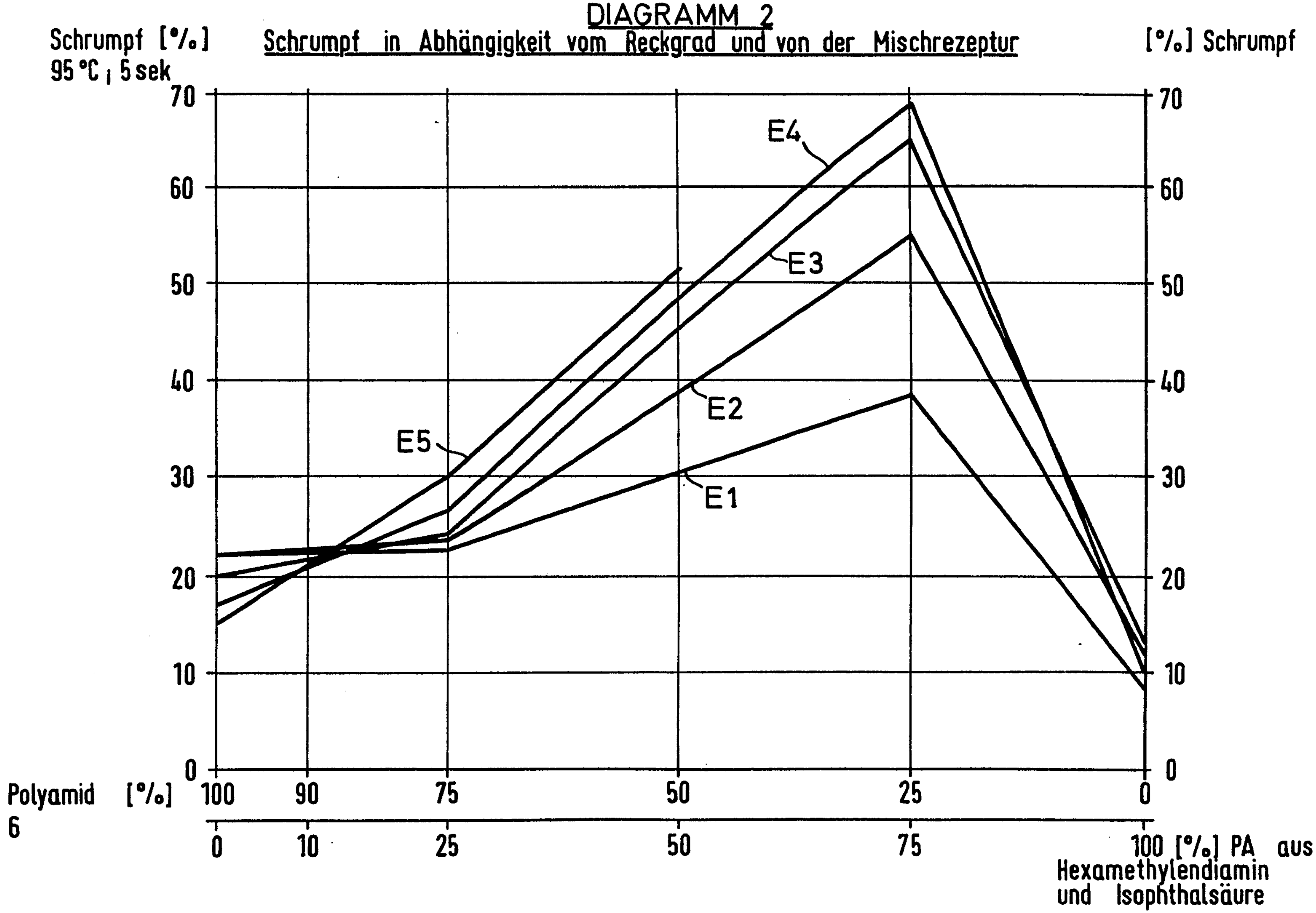

DIAGRAMM 3: Reckkraft in Abhängigkeit vom Reckgrad und von der Mischrezeptur

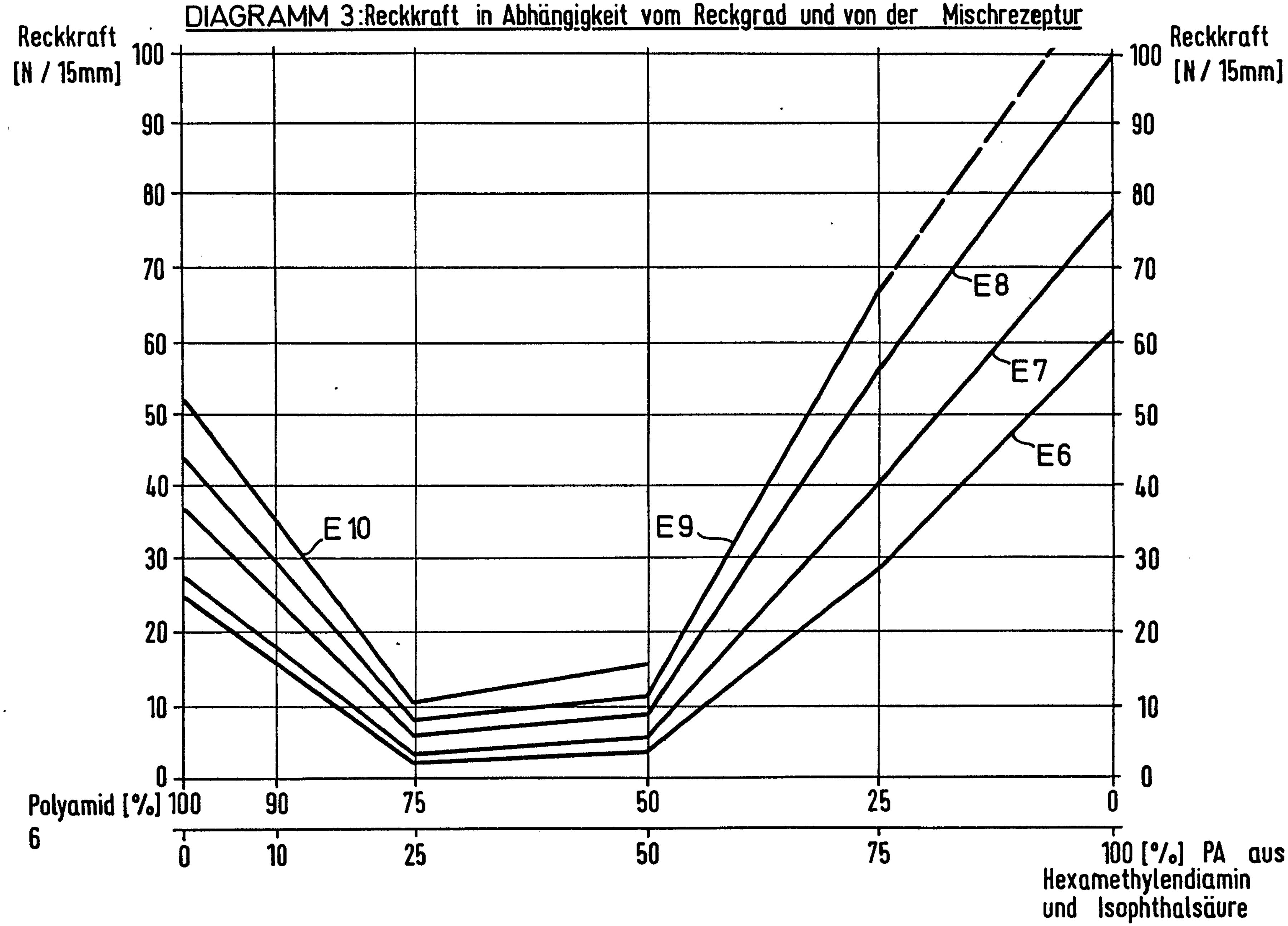

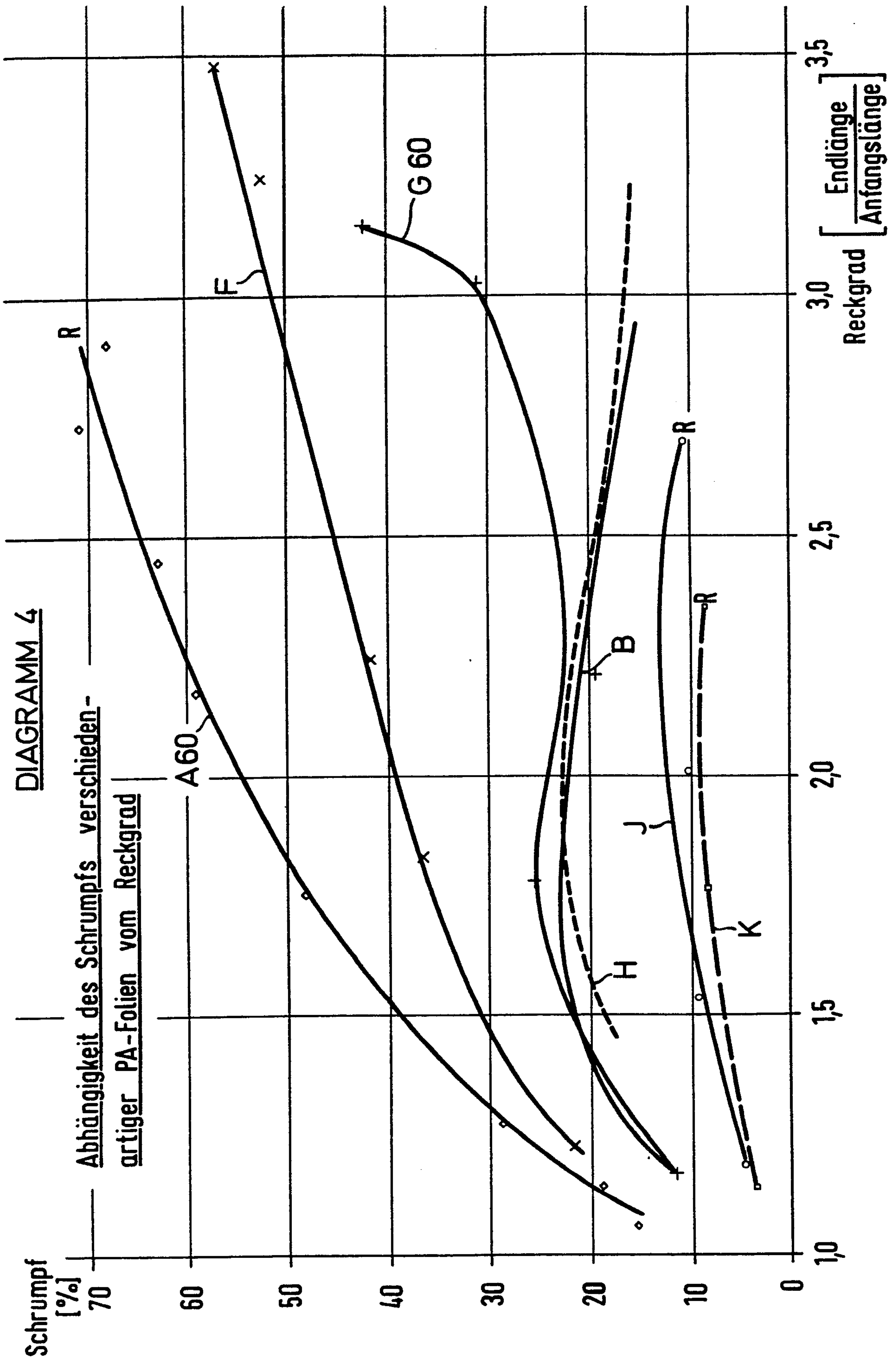
DIAGRAMM 4
Abhängigkeit des Schrumpfs verschieden-
artiger PA-Folien vom Reckgrad
Schrumpf
[%]
70
60
50
40
30
20
10
0
1,0
1,5
2,0
2,5
3,0
3,5
Reckgrad [Endlänge / Anfangslänge]
A60
F
G 60
B
H
J
K
R
R
R

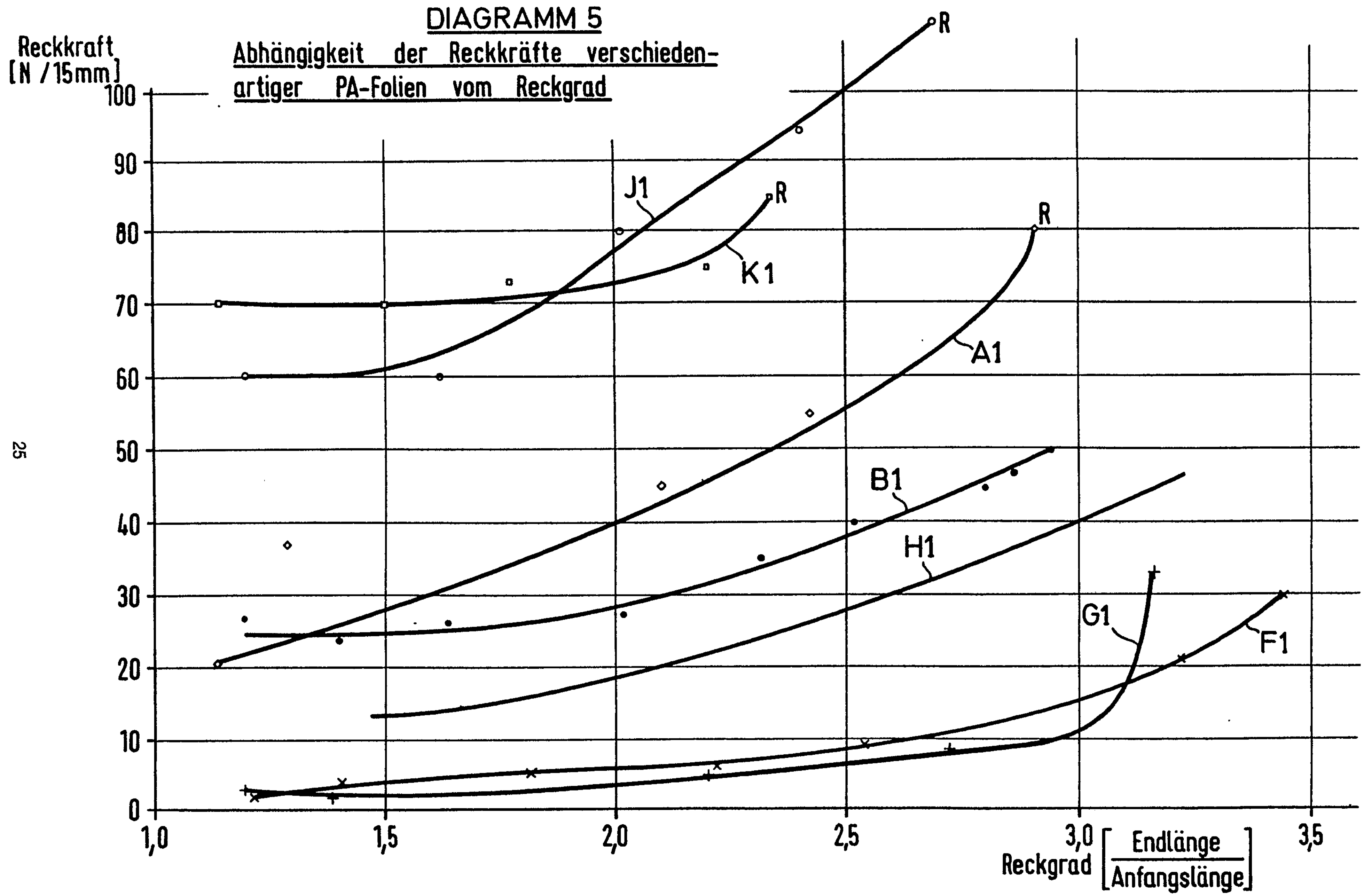
DIAGRAMM 5
Abhängigkeit der Reckkräfte verschiedenartiger PA-Folien vom Reckgrad
Reckkraft [N /15mm]
100
90
80
70
60
50
40
30
20
10
0
1,0
1,5
2,0
2,5
3,0
3,5
Reckgrad [Endlänge / Anfangslänge]
J1
K1
A1
B1
H1
G1
F1
R
R
R

DIAGRAMM 6

Abhängigkeit des Schrumpfverhaltens vom Reckgrad und von der Recktemperatur

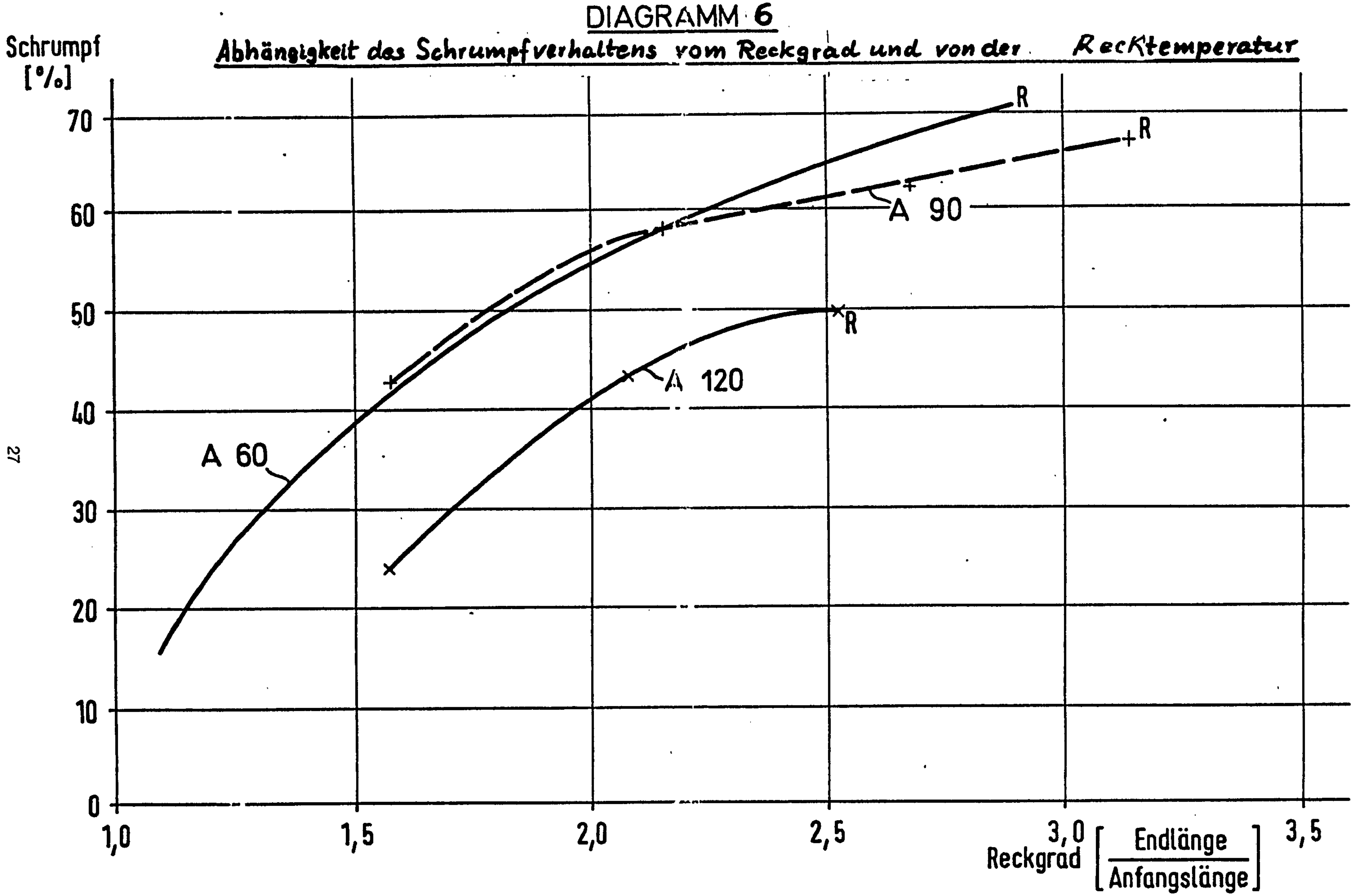

# DIAGRAMM 7

**Abhängigkeit der Reckkraft vom Reckgrad und von der Recktemperatur**

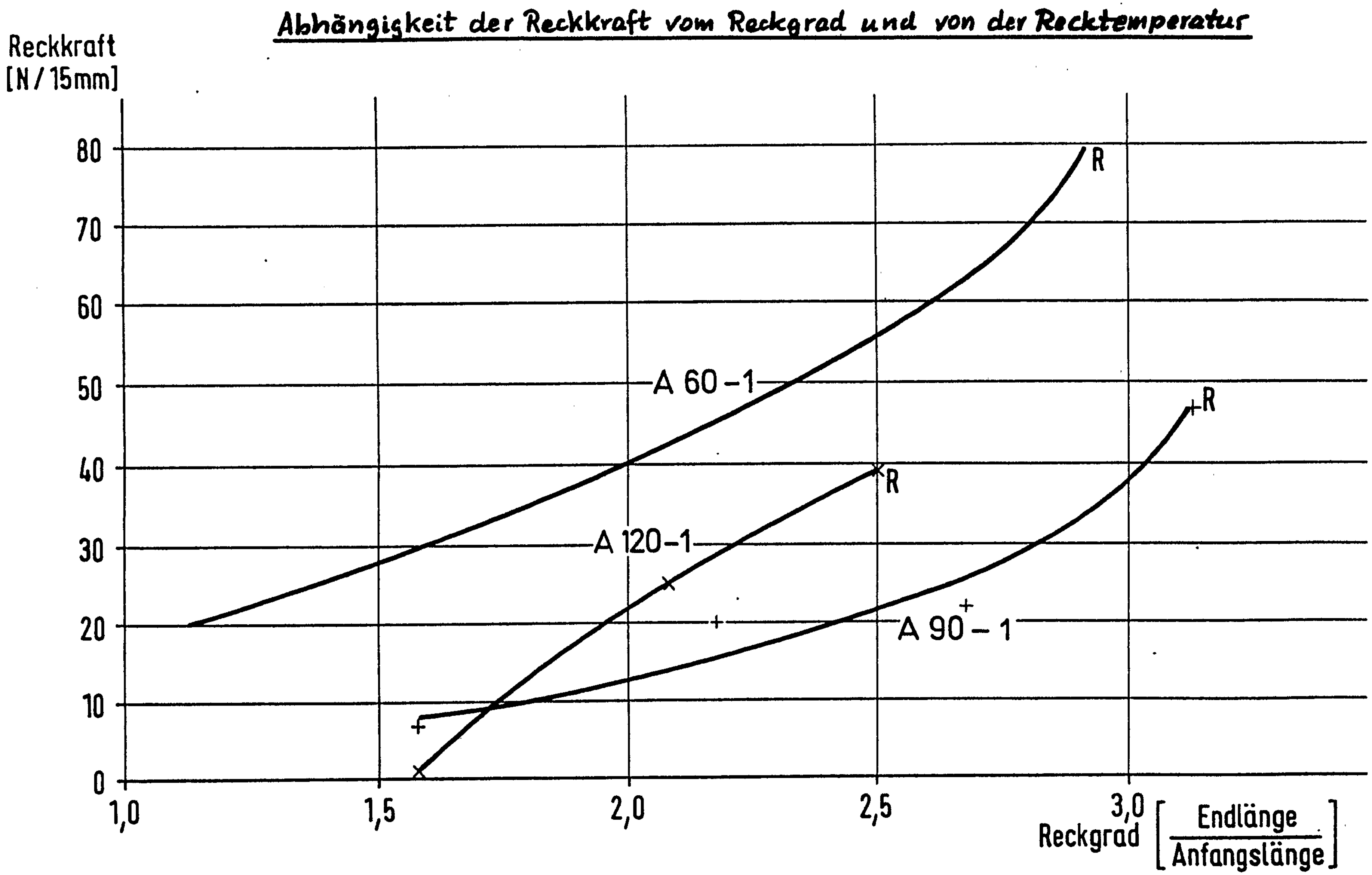

# DIAGRAMM 8

Abhängigkeit des Schrumpfverhaltens vom Reckgrad und von der Recktemperatur

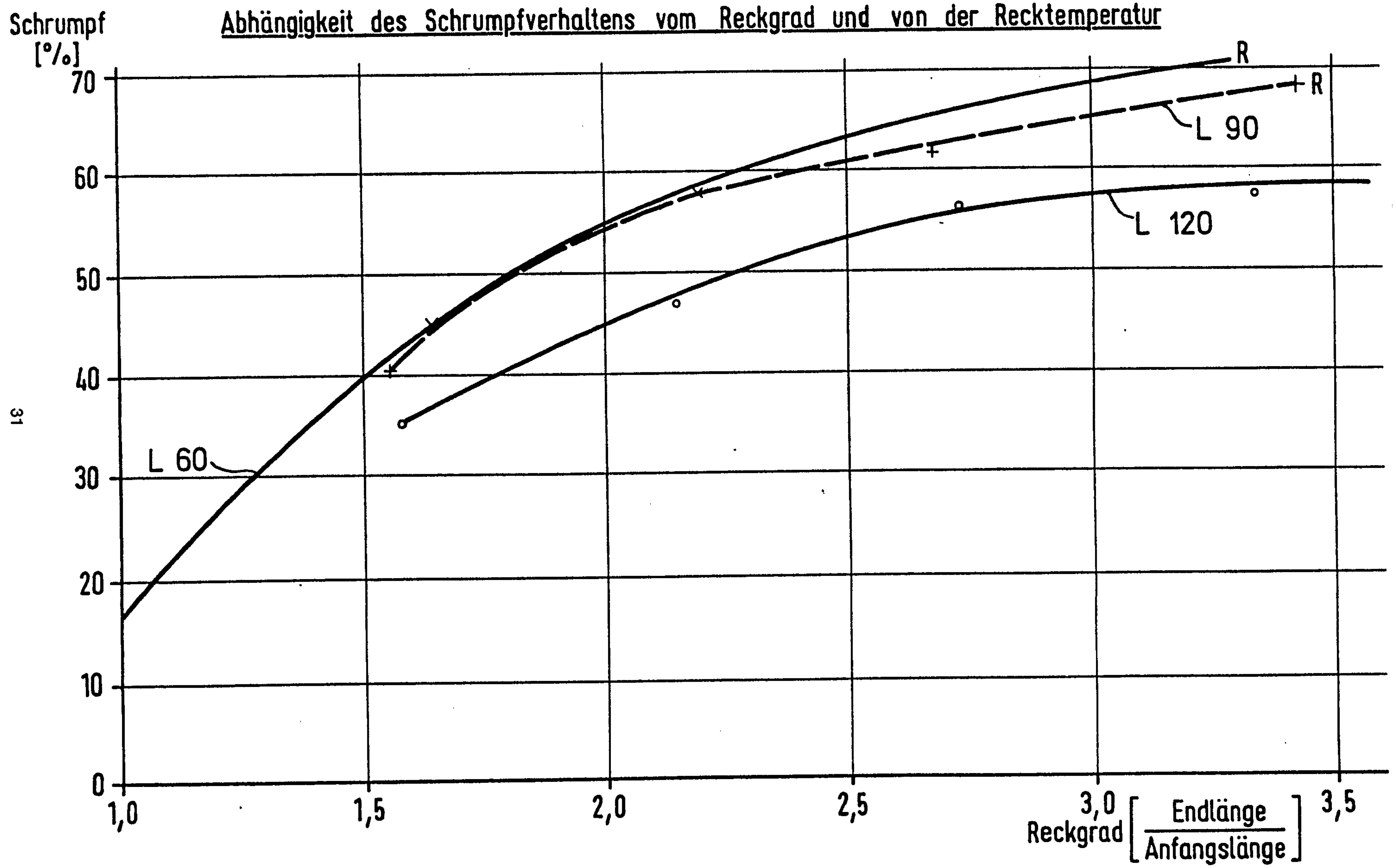

# DIAGRAMM 9

Abhängigkeit der Reckkraft vom Reckgrad und von der Recktemperatur

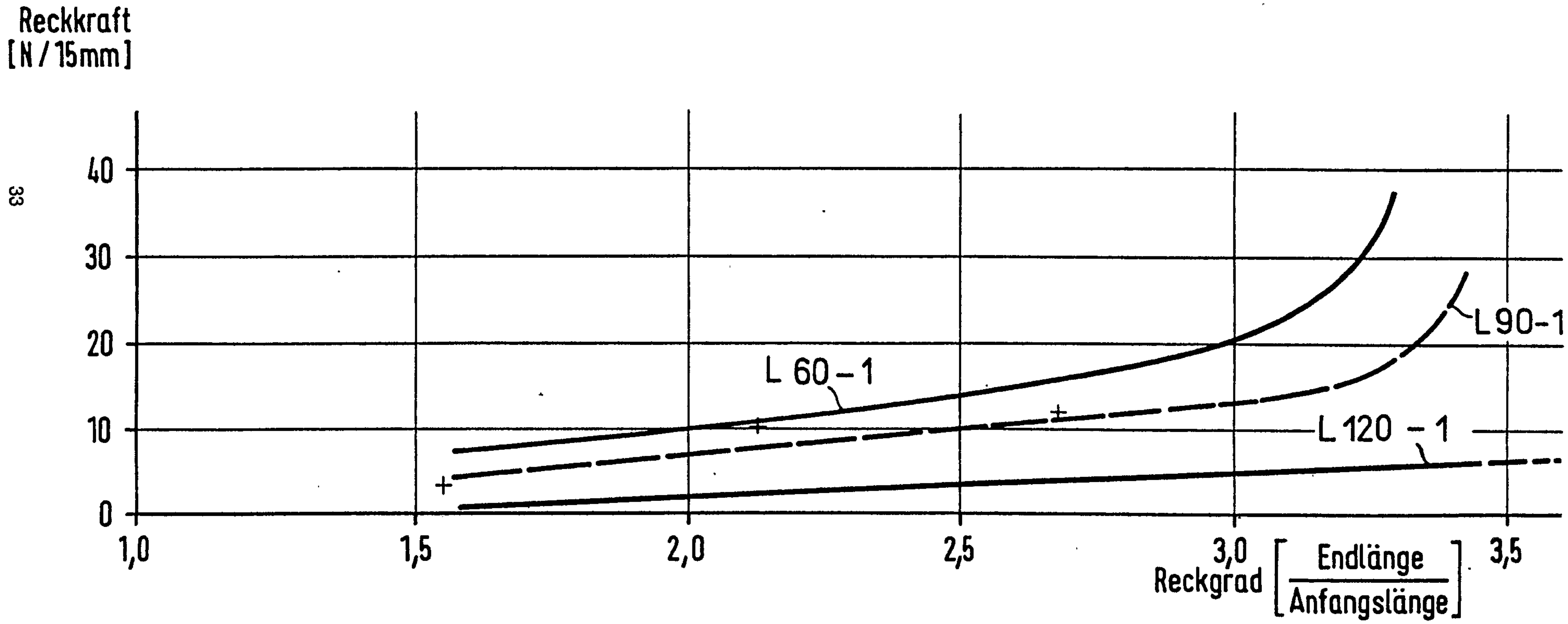

# DIAGRAMM 10

Abhängigkeit des Schrumpfverhaltens einer Polyamid/Äthylen-Vinylacetat-Copolymer-Folie vom Reckgrad

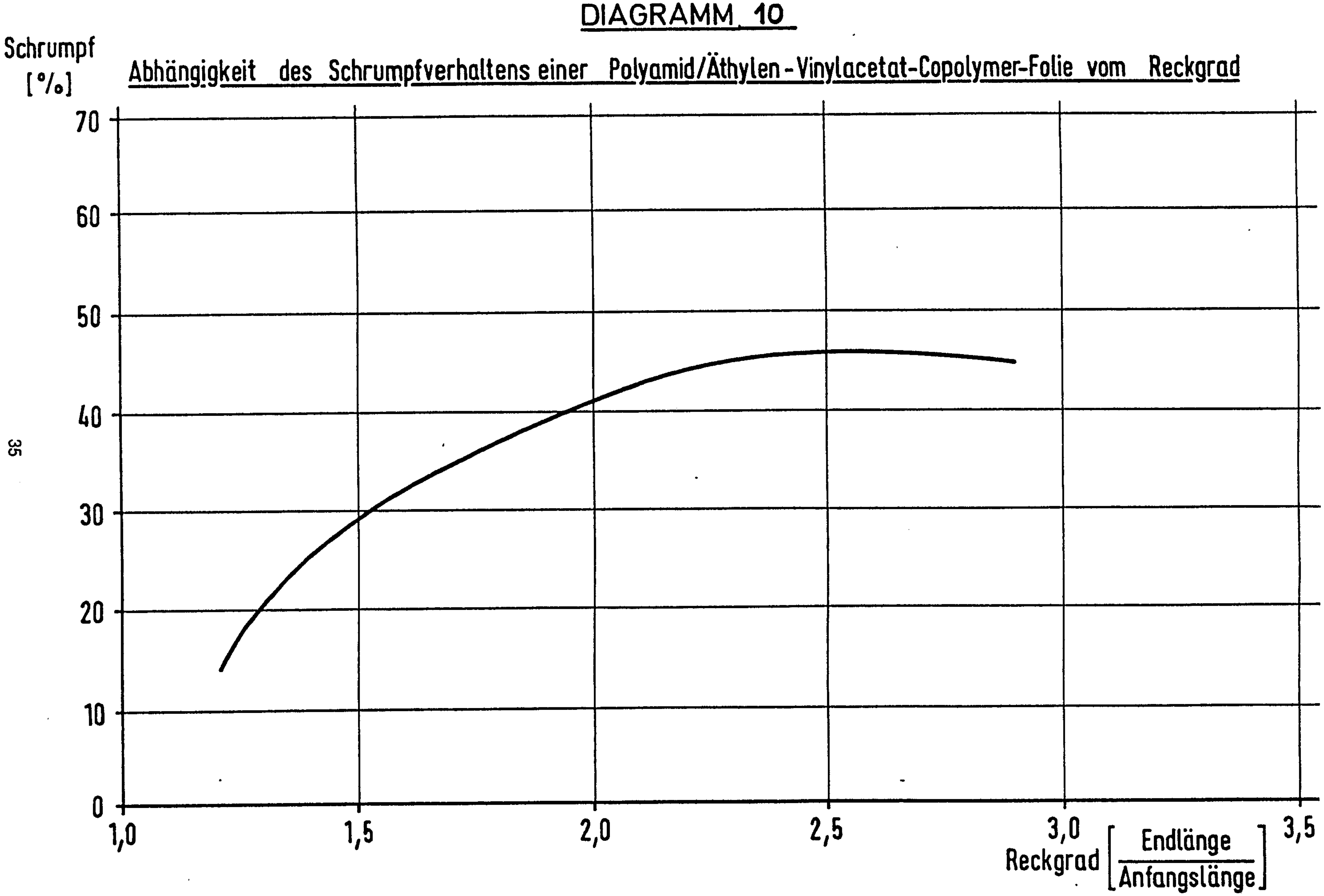

# DIAGRAMM 11

Abhängigkeit des Schrumpfverhaltens verschiedenartiger PA/PE-Folien vom Reckgrad

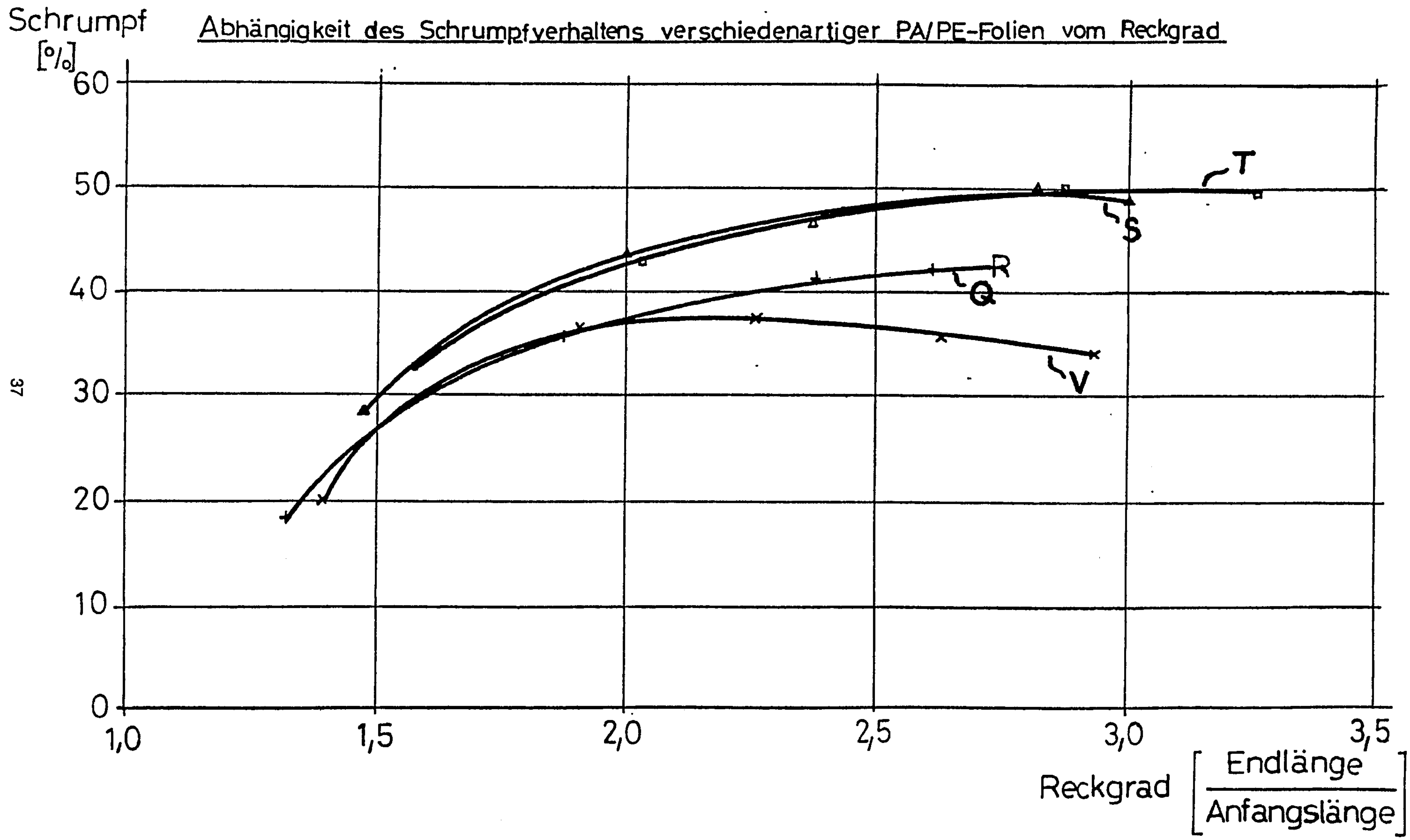

## DIAGRAMM 12

Abhängigkeit des Schrumpfverhaltens einer PA-Folie vom Reckgrad